# EUROPEAN PATENT APPLICATION

(11) **EP 2 373 023 A2**
(43) Date of publication of application: **05.10.2011**
(21) Application number: 10196767.7
(22) Date of filing: 08.12.2006
(51) Int. Cl.: H04N 7/173, G06F 17/30, H04L 29/08, H04N 21/218, H04N 21/231, H04N 21/4788, H04N 21/482, H04N 21/4627, H04N 21/433, H04L 12/28

(54) **An interactive media guidance system having multiple devices**

(30) Priority: 23.12.2005 US 317911; 23.12.2005 US 318244
(62) Divisional of application: 06848726.3
(71) Applicant: United Video Properties, Inc., Santa Clara, CA 95050 (US)
(72) Inventor: Ellis, Michael D., Boulder, CO 80304 (US); Knee, Robert A., Lansdale, PA 19446 (US); Mechler, Robert, Pine Grove, CO 80470 (US)
(74) Representative: Korenberg, Alexander Tal

(57) **Abstract**

An interactive media guidance application implemented on a user equipment device may allow a user to create a group of user equipment devices that may be located in different homes or home networks. The interactive media guidance application may allow the user to add user equipment devices located in the user's home. The interactive media guidance application may also allow the user to invite user equipment devices located in other homes or home networks to join the group or accept requests from user equipment devices located in other homes or home networks to joint the group. The interactive media guidance applications implemented on the user equipment devices in the group may allow users to select content to be stored. The content may be shared with the user equipment devices in the group.

## Description

### Background of the Invention

An interactive media guidance application may be provided to allow users to record television programs or store other content on a server or on user equipment on which the interactive media guidance application is implemented. The interactive media guidance application may also allow users to access the recorded television programs or stored content from the server or user equipment device for viewing.

In some instances, multiple user equipment devices are located in a home and interconnected to form a home network. Interactive media guidance applications implemented on the user equipment devices may allow users to access recorded television programs and stored content from other user equipment devices in the home network.

It may be desirable to expand the user equipment devices capable of sharing recordings and content to include user equipment devices located in other homes and home networks by defining a group of user equipment devices configured to share recordings and content with one another that are located in different homes and home networks.

### Summary of the Invention

Interactive media guidance applications may be provided to allow users to define groups of user equipment devices which are configured to share content with other user equipment devices in their group. The user equipment devices may be located in different homes and home networks and may include recording devices. User equipment devices belonging to the same group may be configured to share content with other user equipment devices in the group.

An interactive media guidance application may allow a user to create a group that may initially contain the user equipment device on which the interactive media guidance application is implemented. The interactive media guidance application may allow the user to add other user equipment devices in the user's home to the group. The interactive media guidance application may create a list of user equipment devices that defines the group, which may be stored on a server, the user equipment device, and/or the service provider. The list may be updated as additional user equipment devices are added to the group. In some embodiments, all of the user equipment devices in the user's home may be automatically added to the group upon the creation of the group.

User equipment devices from other homes may also be added to the group. In some cases, the user that created the group may search for and send invitations to homes to join the group. In some cases, the user that created the group may receive requests from homes to join the group. After these homes have been approved to join the group, users at these homes may configure specific user equipment devices located in these homes to join the group. In some embodiments, all of the user equipment devices in these homes may automatically be added to the group upon approval of the homes to join the group.

Interactive media guidance applications implemented on any of the user equipment devices may allow users to select content to be recorded and shared with the group. For example, the interactive media guidance application may allow the user to select a television program for recording on a server that is accessible by the other user equipment devices in the group. In another example, the interactive media guidance application may allow the user to record content from a video/audio capture device connected to one of the user equipment devices in the group and store the recording on the user equipment device to which the video/audio capture device is connected.

In some embodiments, the selected content may be stored in a distributed fashion on two or more user equipment devices in the group. Each of the user equipment devices in the group may allocate storage space to store the selected content. For example, if the group consists of three user equipment devices, each user equipment device in the group may allocate 20% of its storage capacity to store content shared by the group. In this example, the selected content may be recorded in segments by the user equipment devices in the group. In some embodiments, the segments of the selected program may overlap to ensure that more than one user equipment device is recording a portion of the selected program at any time. In this approach, the selected program may be recorded in its entirety even if one of the user equipment devices experiences a failure.

Interactive media guidance applications implemented on any of the user equipment devices in the group may display a listing of content shared among the user equipment devices in the group. Upon recording content to be shared by the group, the listing of content may be updated to include the recorded content.

Interactive media guidance applications implemented on user equipment devices belonging to the group may access content recorded by other user equipment devices in the group. Any of the interactive media guidance applications may allow users to access such content stored on another user equipment device in the group. For example, the interactive media guidance application may display for one of the users a list of content shared among the user equipment devices in the group (including content from the user equipment devices in the group that are stored on servers). In response to the user selecting one of the content listings, the interactive media guidance application may request the selected content from the server or user equipment device on which the content is stored.

Before allowing the interactive media guidance application to access the content, the server or user equipment device on which the content is stored may authenticate the user equipment on which the interactive media guidance application is implemented as being part of the group. For example, the server or user equipment device may require that the interactive television application provide a group access code (e.g., password) or the server or user equipment device may refer to a list of user equipment devices that defines the group to determine if the user equipment device on which the interactive media guidance application is implemented is on the list.

In response to the server or user equipment device authenticating that the interactive media guidance application is implemented on a user equipment device belonging to the group, the server of user equipment device may transfer the selected content to the interactive media.guidance application.

In one aspect of the invention, the interactive media guidance application may access recorded content shared with a group by determining if the recorded content is stored locally on the user equipment device on which the interactive media guidance application is implemented. If the interactive media guidance application determines that the recorded content is stored.locally, the interactive media guidance application may play the recorded content from the local user equipment device. If the interactive media guidance application determines that the recorded content is not stored locally, the interactive media guidance application may play the recorded content from the remote user equipment device on which the recorded content is stored.

In another aspect of the invention, interactive media guidance applications may allow users to indicate whether recorded content is public or private at the time the user selects to record the content. In this approach, the local user equipment device on which the interactive media guidance application is implemented may contain a combination of public content and private content. If the user indicates that content is public, other user equipment devices belonging to the group may access the content. If the user indicates that the content is private, other user equipment devices belonging to the group may be prevented from accessing the content. In some embodiments, the user may indicate that the content is public for a limited number of user equipment devices in the group.

Further features of the invention, its nature and various advantages will be more apparent from the accompanying drawings and the following detailed description of the preferred embodiments.

### Brief Description of the Drawings

FIG. 1 is a diagram of an illustrative interactive television system in accordance with the present invention.

FIG. 2 is a diagram of illustrative user television equipment in accordance with the present invention.

FIG. 3 is a diagram of additional illustrative user television equipment in accordance with the present invention.

FIG. 4 is a diagram of an illustrative remote control in accordance with the present invention.

FIG. 5 is a diagram of illustrative user computer equipment in accordance with the present invention.

FIG. 6 is a generalized diagram of illustrative user equipment in accordance with the present invention.

FIG. 7 is a diagram of an illustrative home network in which a plurality of user equipment is implemented in a star configuration in accordance with the present invention.

FIG. 8a is a diagram of an illustrative home network in which a plurality of user equipment is implemented in a tree configuration in accordance with the present invention.

FIG. 8b is a diagram of an illustrative home network in which a plurality of user equipment is implemented in a ring configuration in accordance with the present invention.

FIG. 8c is a diagram of an illustrative home network in which a plurality of user equipment is implemented in a bus configuration in accordance with the present invention.

FIG. 9 is a diagram of an illustrative home network in which a plurality of user equipment and a server are implemented in a client-server configuration in accordance with the present invention.

FIG. 10 is a diagram of an illustrative home network in a client-server configuration and in which the set-top-box acts as the server in accordance with the present invention.

FIG. 11a is a diagram of a plurality of home networks implemented in an illustrative neighborhood node configuration in accordance with the present invention.

FIG. 11b is a diagram of an illustrative system in which servers are located at network nodes in accordance with the present invention.

FIG. 11c is a diagram of two illustrative home networks that have been interconnected in accordance with the present invention.

FIG. 11d is a diagram of two illustrative home networks that have been interconnected via a server in accordance with the present invention.

FIG. 12a shows an illustrative display screen of an interactive media guidance application for managing a group of user equipment devices in accordance with the present invention.

FIG. 12b shows an illustrative system diagram of a newly-created group in accordance with the present invention.

FIG. 12c shows an illustrative display screen of an interactive media guidance application for adding user equipment devices to the group in accordance with the present invention.

FIG. 12d shows an illustrative system diagram of a group after user equipment devices have been added to the group in accordance with the present invention_{.}

FIG. 12e shows an illustrative display screen of an interactive media guidance application that has been updated to include.added user equipment devices in accordance with the present invention.

FIGS. 12f-g show an illustrative display screen of an interactive media guidance application for finding homes to invite to join the group in accordance with the present invention.

FIG. 12h shows an illustrative display screen of an interactive media guidance application that displays an invitation to join a group in accordance with the present invention.

FIG. 12i shows an illustrative display screen of an interactive media guidance application that has been updated to include an added home in accordance with the present invention.

FIG. 12j shows an illustrative system diagram of a group after a home and its associated user equipment devices have been added to the group in accordance with the present invention.

FIG. 12k shows an illustrative display screen of an interactive media guidance application that displays a request to join the group in accordance with the present invention.

FIG. 12l shows an illustrative system diagram of a group after a request to join the group has been granted in accordance with the present invention.

FIG. 12m shows an illustrative display screen of an interactive media guidance application for removing one of the user equipment devices from the group in accordance with the present invention.

FIG. 12n shows an illustrative system diagram of a group after a user equipment device has been removed from the group in accordance with the present invention.

FIG. 12o shows an illustrative display screen of an interactive media guidance application that provides details on one of the user equipment devices in the group in accordance with the present invention.

FIG. 12p is an illustrative display screen of an interactive media guidance application for allowing the user to leave the group.

FIG. 12q is an illustrative system diagram of a group after a user has chosen to leave the group in accordance with the present invention..

FIG. 13 shows an illustrative display screen for setting a recording of a television program for a group of user equipment devices in accordance with the present invention.

FIG. 14 shows an illustrative display screen for sharing recorded video clips with a group of user equipment devices in accordance with the present invention.

FIG. 15 shows an illustrative display screen for accessing and managing digital content shared among a group of user equipment devices in accordance with the present invention.

FIG. 16 shows an illustrative flow diagram for sharing content between user equipment devices belonging to a group in accordance with the present invention.

FIG. 17 shows an illustrative flow diagram for accessing recorded content in accordance with the present invention.

FIG. 18 shows an illustrative flow diagram for storing public and private recorded content in accordance with the present invention.

### Detailed Description of the Preferred Embodiments

The amount of media available to users in any given media delivery system can be substantial. Consequently, many users desire a form of media guidance, an interface that allows users to efficiently navigate media selections and easily identify media that they may desire. An application which provides such guidance is referred to herein as an interactive media guidance application or, sometimes, a guidance application.

Interactive media guidance applications may take various forms depending on the media for which they provide guidance. One typical type of media guidance application is an interactive television program guide. Interactive television program guides (sometimes referred to as electronic program guides) are well-known guidance applications that, among other things, allow users to navigate among and locate television programming viewing choices and, in some systems, digital music choices. The television programming (and music programming) may be provided via traditional broadcast, cable, satellite, Internet, or any other means. The programming may be provided on a subscription basis (sometimes referred to as premium programming), as pay-per-view programs, or on-demand such as in video-on-demand (VOD) systems.

With the advent of the Internet, mobile computing, and high-speed wireless networks, users are able to access media on personal computers (PCs) and devices on which they traditionally could not. Non-television-centric platforms (i.e., platforms that distribute media with equipment not part of the user's broadcast, cable or satellite television-delivery network) allow users to navigate among and locate desirable video clips, full motion videos (which may include television programs), images, music files, and other suitable media. Consequently, media guidance is also necessary on modern non-television-centric platforms. For example, media guidance applications may be provided as on-line applications (i.e., provided on a web-site), or as stand-alone applications or clients on hand-held computers, personal digital assistants (PDAs) or cellular telephones. In some systems, users may control equipment remotely via a media guidance application. For example, users may access an online media guide and set recordings or other settings on their in home equipment. This may be accomplished by the on-line guide controlling the user's equipment directly or via another media guide that runs on the user's equipment. Remote access of interactive media guidance applications is discussed in greater detail in U.S. Patent Application No. 11/246,392, filed October 7, 2005, which is hereby incorporated by reference herein in its entirety.

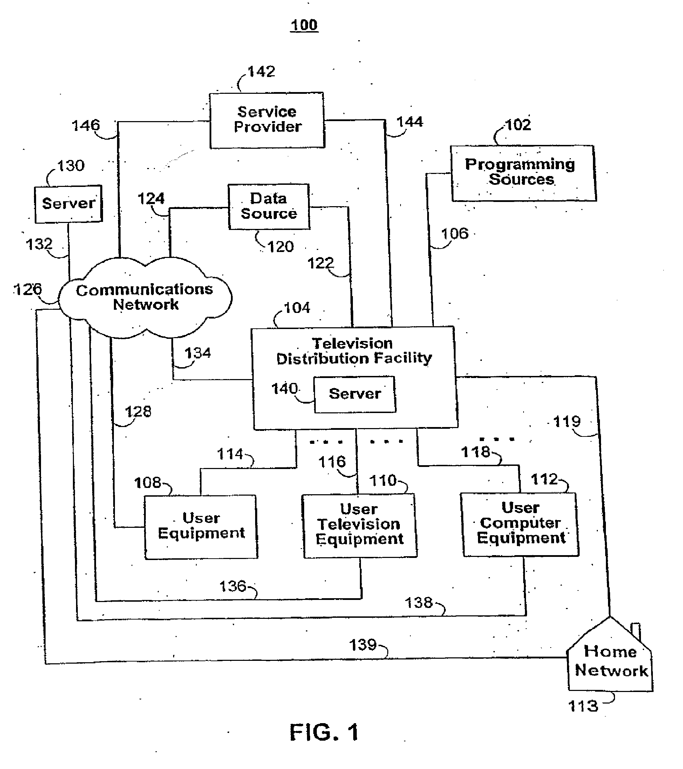

An illustrative interactive media guidance system 100 in accordance with the present invention is shown in FIG. 1. System 100 is intended to illustrate a number of approaches by which media of various types, and guidance for such media, may be provided to (and accessed by) end-users. The present invention, however, may be applied in systems employing any one or a subset of these approaches, or in systems employing other approaches for delivering media and providing media guidance.

The first approach represents a typical television-centric system in which users may access television (and in some systems music) programming. This includes programming sources 102 and distribution facility 104. Media such as television programming and digital music is provided from programming sources 102 to distribution facility 104, using communications path 106. Communications path 106 may be a satellite path, a fiber-optic path, a cable path, or any other suitable wired or wireless communications path or combination of such paths.

Programming sources 102 may be any suitable sources of television and music programming, such as television broadcasters (e.g., NBC, ABC, and HBO) or other television or music production studios. Programming sources 102 may provide television programming in a variety of formats in high definition and standard definition, such as, for example, 1080p, 1080i, 720p, 480p, 480i, and any other suitable format.

Distribution facility 104 may be a cable system headend, a satellite television distribution facility, a television broadcaster, or any other suitable facility for distributing video media (e.g., television programs, video-on-demand programs, pay-per-view programs) and audio media (e.g., music programming and music clips) to the equipment of subscribers of the corresponding cable, satellite, or IPTV system. In some approaches, distribution facility 104 may also distribute other media to users, such as video and audio clips, web pages, and interactive applications, that may be offered to subscribers of a given cable, satellite, or IPTV system. There are typically numerous distribution facilities 104 in system 100, but only one is shown in FIG. 1 to avoid overcomplicating the drawing.

Distribution facility 104 may be connected to various user equipment devices 108, 110, and 112. Such user equipment devices may be located, for example, in the homes of users. User equipment devices may include user television equipment 110, user computer equipment 112, or any other type of user equipment suitable for accessing media. User equipment 108 may be any type of user equipment (e.g., user television equipment, user computer equipment, cellular phones, handheld video players, gaming platforms, etc.) and, for simplicity, user equipment devices may be referred to generally as user equipment 108.

User equipment devices 108, 110, and 112 may receive media (such as television, music, web pages, etc.) and other data from distribution facility 104 over communications paths, such as communications paths 114, 116, and 118, respectively. User equipment devices 108, 110, 112 may also transmit signals to distribution facility 104 over paths 114, 116, and 118, respectively. Paths 114, 116, and 118 may be cables or other wired connections, free-space connections (e.g., for broadcast or other wireless signals), satellite links, or any other suitable link or combination of links.

A second approach illustrated in FIG. 1 by which media and media guidance are provided to end users is a non-television-centric approach. In this approach media such as video (which may include television programming), audio, images, web pages, or a suitable combination thereof, are provided to equipment of a plurality of users (e.g., user equipment 108, user television equipment 110, and user computer equipment 112) by server 130 via communications network 126. This approach is non-television-centric because media (e.g., television programming) is provided by and delivered at least partially, and sometimes exclusively, via equipment that have not traditionally been primarily focused on the television viewing experience. Non-television-centric equipment is playing a larger role in the television viewing experience.

In some embodiments for this approach, communications network 126 is the Internet. Server 130 may provide for example, a web site that is accessible to the user's equipment and provides an on-line guidance application for the user. In such approaches, the user's equipment may be, for example, a PC or a hand-held device such as a PDA or web-enabled cellular telephone that incorporates a web browser. In other embodiments, server 130 uses the Internet as a transmission medium but does not use the Web. In such approaches, the user's equipment may run a client application that enables the user to access media. In still other approaches, communications network 126 is a private communications network, such as a cellular phone network, that does not include the Internet.

In yet other approaches, communications network 126 includes a private communications network and the Internet. For example, a cellular telephone or other mobile-device service provider may provide Internet access to its subscribers via a private communications network, or may provide media such as video clips or television programs to its subscribers via the Internet and its own network.

The aforementioned approaches for providing media may, in some embodiments, be combined. For example, a distribution facility 104 may provide a television-centric media delivery system, while also providing users' equipment (e.g., 108, 110 and 112) with access to other non-television-centric delivery systems provided by server 130. For example, a user's equipment may include a web-enabled set-top box or a television enabled PC. Distribution facility 104 may, in addition to television and music programming, provide the user with Internet access whereby the user may access server 130 via communications network 126. Distribution facility 104 may communicate with communications network 126 over any suitable path 134, such as a wired path, a cable path, fiber-optic path, satellite path, or combination of such paths.

Media guidance applications may be provided using any approach suitable for the type of media and distribution system for which the applications are used. Media guidance applications may be, for example, stand alone applications implemented on users' equipment. In other embodiments, media guidance applications may be client-server applications where only the client resides on the users' equipment. In still other embodiments, guidance applications may be provided as web sites accessed by a browser implemented on the users' equipment. Whatever the chosen implementation, the guidance application will require information about the media for which it is providing guidance. For examples, titles or names of media, brief descriptions, or other information may be necessary to allow users to navigate among and find desired media selections.

In some television-centric embodiments, for example, the guidance application may be a stand-alone interactive television program guide that receives program guide data via a data feed (e.g., a continuous feed, trickle feed, or data in the vertical blanking interval of a channel). Data source 120 in system 100 may include a program listings database that is used to provide the user with television program-related information such as scheduled broadcast times, titles, channels, ratings information (e.g., parental ratings and critic's ratings), detailed title descriptions, genre or category information (e.g., sports, news, movies, etc.), program format (e.g., standard definition, high definition) and information on actors and actresses. Data source 120 may also be used to provide advertisements (e.g., program guide advertisements and advertisements for other interactive television applications), real-time data such as sports scores, stock quotes, news data, and weather data, application data for one or more media guidance applications or other interactive applications, and any other suitable data for use by system 100. As another example, data source 120 may provide data indicating the types of information that may be included in interactive media guidance overlays (e.g., at the request of the user, absent user modification, etc.).

Program guide data may be provided to user equipment, including user equipment located on home network 113, using any suitable approach. For example, program schedule data and other data may be provided to the user equipment on a television channel sideband, in the vertical blanking interval of a television channel, using an in-band digital signal, using an out-of-band digital signal, or by any other suitable data transmission technique. Program schedule data and other data may be provided to user equipment on multiple analog or digital television channels. Program schedule data and other data may be provided to the user equipment with any suitable frequency (e.g., continuously, daily, in response to a request from user equipment, etc.).

In some television-centric embodiments, guidance data from data source 120 may be provided to users' equipment using a client-server approach. For example, a guidance application client residing on the user's equipment may initiate sessions with server 140 to obtain guidance data when needed. In some embodiments, the guidance application may initiate sessions with server 140 via a home network server (e.g., a server located in home network 113 that supports the user equipment devices located in home network 113).

There may be multiple data sources (such as data source 120) in system 100, although only one data source is shown in FIG. 1 to avoid overcomplicating the drawing. For example, a separate data source may be associated with each of a plurality of television broadcasters and may provide data that is specific to those broadcasters (e.g., advertisements for future programming of the broadcasters, logo data for displaying broadcasters' logos in program guide display screens, etc.). Data source 120 and any other system components of FIG. 1 may be provided using equipment at one or more locations. Systems components are drawn as single boxes in FIG. 1 to avoid overcomplicating the drawings.

Data source 120 may provide data to distribution facility 104 over communications path 122 for distribution to the associated user equipment and home network 113 (discussed below) over paths 114, 116, 118, and 119 (e.g., when data source 120 is located at a main facility). Communications path 122 may be any suitable communications path such as a satellite communications path or other wireless path, a fiber-optic or other wired communications path, a path that supports Internet communications, or other suitable path or combination of such paths.

In some television-centric and non-television centric approaches, data source 120 may provide guidance data directly to user equipment 108 over path 124, communications network 126, and path 128 (e.g., when data source 120 is located at a facility such as one of programming sources 102). In some embodiments of the present invention, data source 120 may provide guidance data directly to user equipment located on home network 113 (discussed below) over path 124, communications network 126, and path 139 (e.g., when data source 120 is located at a facility such as one of programming sources 102). Paths 124, 128, and 139 may be wired paths such as telephone lines, cable paths, fiber-optic paths, satellite paths, wireless paths, any other suitable paths or a combination of such paths. Communications network 126 may be any suitable communications network, such as the Internet, the public switched telephone network, or a packet-based network.

User equipment devices, including user equipment devices located on home network 113 (discussed below), such as user television equipment and personal computers, may use the program schedule data and other interactive media guidance application data to display program listings and other information (e.g., information on digital music) for the user. An interactive television program guide application or other suitable interactive media guidance application may be used to display the information on the user's display (e.g., in one or more overlays that are displayed on top of video for a given television channel). Interactive displays may be generated and displayed for the user using any suitable approach. In one suitable approach, distribution facility 104, server 130, or another facility, may generate application display screens and may transmit the display screens to user equipment for display. In another suitable approach, user equipment may store data for use in one or more interactive displays (e.g., program schedule data, advertisements, logos, etc.), and an interactive media guidance application implemented at least partially on the user equipment may generate the interactive displays based on instructions received from distribution facility 104, server 130 or another facility. In some embodiments of the present invention, user equipment may store only the data that is used to generate the interactive television displays (e.g., storing logo data for a particular television broadcaster only if the logo is to be included in one or more interactive television displays). In some embodiments of the present invention, user equipment may store data that is not necessarily used to generate the interactive television displays (e.g., storing advertisements associated with a particular television broadcaster that may or may not be displayed depending on, for example, the outcome of negotiations with the television broadcaster). Any other suitable approach or combination of approaches may be used to generate and display interactive overlays for the user.

In still other embodiments, interactive media guidance applications (television-centric and non-television centric) may be provided online as, for example, websites. For example, server 130 may provide an online interactive television program guide. As another example, user equipment 108 may be a mobile device, such as a cellular telephone or personal digital assistant (PDA). The mobile device may be web-enabled to allow the user to access an on-line guidance application (which may be modified from its original version to make it appropriate for a cellular phone). Alternatively, the mobile device may have an applet that communicates with server 130 to obtain guidance data via the Internet.

Server 130 may receive program schedule data and other data from data source 120 via communications path 124, communications network 126, and communications path 132 or via another suitable path or combination of paths. Path 132 may be a satellite path, fiber-optic path, wired path, or any other path or combination of paths. User equipment 108 may access the on-line interactive media guidance application and other sources from server 130 via communications path 128. User equipment 108 may also access the application and other services on server 130 via communications path 114, distribution facility 104, and communications path 134. For example, a cable modem or other suitable equipment may be used by user equipment 108 to communicate with distribution facility 104.

User equipment such as user television equipment 110, user computer equipment 112, and user equipment located on home network 113 may access the on-line interactive media guidance application and server 130 using similar arrangements. User television equipment 110 may access the on-line interactive media guidance application and server 130 using communications path 136 or using path 116, distribution facility 104, and path 134. User computer equipment 112 may access the on-line interactive media guidance application and server 130 using communications path 138 or using path 118, distribution facility 104, and path 134. User equipment located on home network 113 may access the on-line media guidance application and server 130 using communications path 139 or using path 119, distribution facility 104, and path 134. Paths 136, 138, and 139 may be any suitable paths such as wired paths, cable paths, fiber-optic paths, wireless paths, satellite paths, or a combination of such paths.

In some embodiments, system 100 may support other interactive applications in addition to the interactive media guidance applications. Such applications may be implemented using any suitable approach. For example, the interactive applications may be implemented locally on the user equipment or in a distributed fashion (e.g., using a client-server architecture in which the user equipment serves at least partly, and for at least some of the time, as the client and a server, such as server 140 at distribution facility 104, server 130, or other suitable equipment acts as the server). Other distributed architectures may also be used if desired. Moreover, some or all of the features of the interactive applications of system 100 (including the media guidance application) may be provided using operating system software or middleware software. Such operating system software and middleware may be used instead of or in combination with application-level software. In yet other approaches, interactive applications may also be supported by servers or other suitable equipment at one or more service providers such as service provider 142. Regardless of the particular arrangement used, the software that supports these features may be referred to as an application or applications.

For example, an interactive application such as a home shopping service may be supported by a service provider such as service provider 142 that has sales representatives, order fulfillment facilities, account maintenance facilities, and other equipment for supporting interactive home shopping features. A home shopping application that is implemented using the user equipment may be used to access the service provider to provide such features to the user. The user equipment may access service provider 142 via distribution facility 104 and communications path 144 or via communications network 126 and communications path 146. Communications paths such as paths 144 and 146 may be any suitable paths such as wired paths, cable paths, fiber-optic paths, satellite paths, or a combination of such paths.

Another example of an interactive application is a home banking application. A home banking service may be supported using personnel at facilities Such as service provider 142. An interactive home banking application that is implemented using the user equipment may access the home banking service via distribution facility 104 and communications path 144 or via communications network 126 and communications path 146.

If desired, an interactive media guidance application such as a network-based video recorder or a video-on-demand application may be supported using server 140, server 130, a home network server, or equipment at service provider 142. Video-on-demand content and video recorded using a network-based video recorder arrangement may be stored on server 140 or server 130 or a home network server or at service provider 142 and may be provided to the user equipment when requested by users. An interactive television program guide, for example, may be used to support the functions of a digital video recorder (sometimes called a digital video recorder) that is implemented using user equipment 108. Illustrative equipment that may be used to support digital video recorder functions include specialized digital video recorder devices, integrated receiver decoders (IRDs), set-top boxes with integrated or external hard drives, or personal computers with video recording capabilities.

Interactive applications such as media guidance applications (e.g., interactive television program guide applications and video-on-demand applications), home shopping applications, home banking applications, game applications, and other applications (e.g., applications related to e-mail and chat or other communications functions, etc.) may be provided as separate applications that are accessed through a navigation shell application (i.e., a menu application with menu options corresponding to the applications). The features of such applications may be combined. For example, games, video-on-demand services, home shopping services, network-based video recorder functions, digital video recorder functions, navigational functions, program guide functions, communications functions, and other suitable functions may be provided using one application or any other suitable number of applications. The one or more applications may display various overlays on user equipment including, for example, interactive television information on top of video for a given television channel.

Interactive television program guide applications, home banking applications, home shopping applications, network-based video recorder and digital video recorder applications, video-on-demand applications, gaming applications, communications applications, and navigational applications are only a few illustrative examples of the types of interactive media guidance and other applications that may be supported by system 100. Other suitable interactive applications that may be supported include news services, web browsing and other Internet services, and interactive wagering services (e.g., for wagering on horse races, sporting events, and the like). Interactive television overlays that are displayed by these applications may also be customized in accordance with the present invention.

Users may have multiple types of user equipment by which they access media and obtain media guidance. For example, some users may have home networks that are accessed by in-home and mobile devices. As shown in FIG. 1, home network 113 communicates with distribution facility 104 and server 130 over paths 119 and 139 (and, in the case of server 130, communications network 126). Such home networks 113 may be located, for example, in homes of users or distributed, for example, among homes of users. Home networks 113 may each include a plurality of interconnected user equipment devices, such as, for example user equipment devices 108, 110 and 112. In some embodiments, users may control in-home devices via a media guidance application implemented on a remote device. For example, users may access an online media guidance application on a website via a personal computer at their office, or a mobile device such as a PDA or web-enabled cellular telephone. The user may set settings (e.g., recordings, reminders, or other settings) on the on-line guidance application to control the user's in-home equipment. The on-line guide may control the user's equipment directly, or by communicating with a media guidance application on the user's in-home equipment.

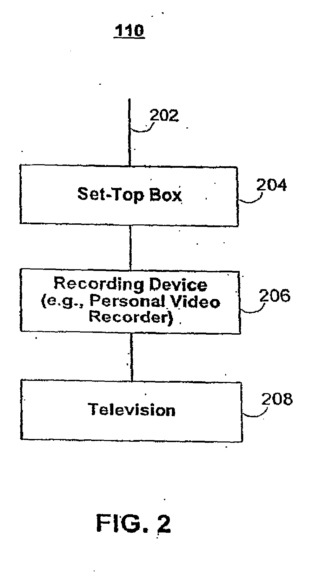

FIGS. 2-6 show illustrative arrangements for user equipment. An illustrative set-top box-based arrangement for user equipment 110 is shown in FIG. 2. User television equipment 110 may be stand-alone or a part of home network 113 (FIG. 1). Input/output 202 may be connected to communications paths such as paths 116 and 136 (FIG. 1). Input/output functions may be provided by one or more wires or communications paths, but are shown as a single path in FIG. 2 to avoid overcomplicating the drawing. Television programming, program guide data, and any other suitable interactive media guidance application data or other data may be received using input/output 202. Commands and requests and other data generated as a result of user interactions with the interactive media guidance application may also be transmitted over input/output 202.

Set-top box 204 may be any suitable analog or digital set-top box (e.g., a cable set-top box). Set-top box 204 may contain an analog tuner for tuning to a desired analog television channel (e.g., a channel comprising television programming, interactive television data, or both). Set-top box 204 may also contain digital decoding circuitry for receiving digital television channels (e.g., channels comprising television or music programming, interactive television data, etc.). Set-top box 204 may also contain a high-definition television tuner for receiving and processing high-definition television channels. Analog, digital, and high-definition channels may be handled together if desired. Multiple tuners may be provided (e.g., to handle simultaneous watch and record functions or picture-in-picture (PIP) functions). Box 204 may be an integrated receiver decoder (IRD) that handles satellite television. If desired, box 204 may have circuitry for handling cable, over-the-air broadcast, and satellite content.

Set-top box 204 may be configured to output media, such as television programs, in a preferred format. Because television programs may be received in a variety of formats, set-top box 204 may contain scaler circuitry for upconverting and downconverting television programs into the preferred output format used by set-top box 204. For example, set-top box 204 may be configured to output television programs in 720p. In this example, the scaler circuitry may upconvert standard-definition television programs having 480 lines of vertical resolution to 720p format and downconvert certain high-definition television programs having 1080 lines of vertical resolution to 720p format.

Box 204 may include a storage device (e.g., a digital storage device such as a hard disk drive) for providing recording capabilities. Box 204 may also be connected to a recording device 206 such as a video cassette recorder, digital video recorder, optical disc recorder, or other device or devices with storage capabilities. In some embodiments, box 204 may be configured to record either standard-definition television programs or high-definition television programs. In some embodiments, box 204 may be configured to record both standard-definition television programs and high-definition television programs.

Set-top box 204 contains a processor (e.g., a microcontroller or microprocessor or the like) that is used to execute software applications. Set-top box 204 may contain memory such as random-access memory for use when executing applications. Nonvolatile memory may also be used (e.g., to launch a boot-up routine and other instructions). Hard disk storage in box 204 or in recording device 206 may be used to back up data and to otherwise support larger databases and storage requirements than may be supported using random-access memory approaches. Hard disk storage in box 204 or in recording device 206 may also be used to store and back up program guide settings or saved user preferences.

Set-top box 204 may have infrared (IR) or other communications circuitry for communicating with a remote control or wireless keyboard. Set-top box 204 may also have dedicated buttons and a front-panel display. The front-panel display may, for example, be used to display the current channel to which the set-top box is tuned.

Set-top box 204 may also have communications circuitry such as a cable modem, an integrated services digital network (ISDN) modem, a digital subscriber line (DSL) modem, a telephone modem, or a wireless modem for communications with other equipment. Such communications may involve the Internet or any other suitable communications networks or paths. If desired, the components of set-top box 204 may be integrated into other user equipment (e.g., a television or video recorder).

Recording device 206 may be used to record videos provided by set-top box 204. For example, if set-top box 204 is tuned to a given television channel, the video signal for that television channel may be passed to recording device 206 for recording on a videocassette, compact disc, digital video disk, or internal hard drive or other storage device. In some embodiments, recording device 206 may be configured to record either standard-definition television programs or high-definition television programs. In some embodiments, recording device 206 may be configured to record both standard-definition television programs and high-definition television programs. Recording device 206 may have communications circuitry such as a cable modem, an ISDN modem, a DSL modem, or a telephone modem for communications with other equipment. Such communications may involve the Internet or any other suitable communications networks or paths. The components of recording device 206 may be integrated into other user equipment (e.g., a television, stereo equipment, etc.).

Recording device 206 may be controlled using a remote control or other suitable user interface. If desired, video recorder functions such as start, stop, record and other functions for device 206 may be controlled by set-top box 204. For example, set-top box 204 may control recording device 206 using infrared commands directed toward the remote control inputs of recording device 206 or set-top box 204 may control recording device 206 using other wired or wireless communications paths between box 204 and device 206.

The output of recording device 206 may be provided to television 208 for display to the user. In some embodiments, television 208 may be capable of displaying high-definition programming (i.e., HDTV-capable). If desired, multiple recording devices 206 or no recording device 206 may be used. If recording device 206 is not present or is not being actively used, the video signals from set-top box 204 may be provided directly to television 208. Any suitable television or monitor may be used to display the video. For example, if the video is in a high-definition format, an HDTV-capable television or monitor is required to display the video. In the equipment of FIG. 2 and the other equipment of system 100 (FIG. 1), the audio associated with various video items is typically distributed with those video items and is generally played back to the user as the videos are played. In some embodiments, the audio may be distributed to a receiver (not shown), which processes and outputs the audio via external speakers (not shown).

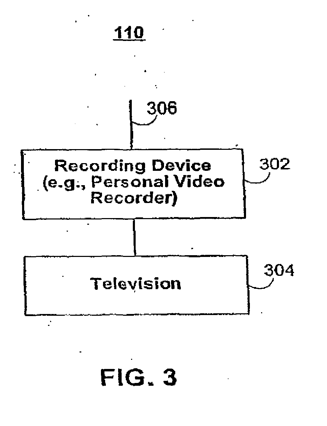

Another illustrative arrangement for user television equipment 110 (FIG. 1) is shown in FIG. 3. User television equipment 110 may be stand-alone or a part of home network 113 (FIG. 1). In the example of FIG. 3, user television equipment 110 includes a recording device 302 such as a digital video recorder (e.g., a digital video recorder (DVR)) that uses a hard disk or other storage for recording video. Recording device 302 may alternatively be a digital video disc recorder, compact disc recorder, videocassette recorder, or other suitable recording device. Equipment 110 of FIG. 3 may also include a television 304. In some embodiments, television 304 may be HDTV-capable. Input/output 306 may be connected to communications paths such as paths 116 and 136 (FIG-1). Television programming, program schedule data, and other data (e.g., advertisement data, data indicating one or more television channels for which the display of an overlay is to be customized, etc.) may be received using input/output 306. Commands and requests and other data from the user may be transmitted over input/output 306.

Recording device 302 may contain at least one analog tuner for tuning to a desired analog television channel (e.g., to display video for a given television channel to a user, to receive program guide data and other data) and multiple other tuners may also be provided. Recording device 302 may also contain digital decoding circuitry for receiving digital television programming, music programming, program guide data, and other data on one or more digital channels. Recording device 302 may also contain circuitry for receiving high-definition television channels. If desired, recording device 302 may contain circuitry for handling analog, digital, and high-definition channels. Recording device 302 also contains a processor (e.g., a microcontroller or microprocessor or the like) that is used to execute software applications. Recording device 302 may contain memory such as random-access memory for use when executing applications. Nonvolatile memory may also be used to store a boot-up routine or other instructions. The hard disk and other storage in recording device 302 may be used to support databases (e.g., program guide databases or other interactive television application databases). The hard disk or other storage in recording device 302 may also be used to record video such as television programs or video-on-demand content or other content provided to recording device 302 over input/output 306.

Recording device 302 may have IR communications circuitry or other suitable communications circuitry for communicating with a remote control. Recording device 302 may also have dedicated buttons and a front-panel display. The front-panel display may, for example, be used to display the current channel to which the recording device is tuned.

Recording device 302 may also have communications circuitry such as a cable modem, an ISDN modem, a DSL modem, a telephone modem, or a wireless modem for communications with other equipment. Such communications may involve the Internet or other suitable communications networks or paths.

If desired, recording device 302 may include a satellite receiver or other equipment that has wireless communications circuitry for receiving satellite signals.

Recording device 302 of FIG. 3 or recording device 206 of FIG. 2 may record new video while previously recorded video is being played back on television 304 or 208. This allows users to press a pause button during normal television viewing. When the pause button is pressed, the current television program is stored on the hard disk of digital video recorder 302. When the user presses play, the recorded video may be played back. This arrangement allows the user to seamlessly pause and resume television viewing. Recording devices 302 and 206 may also be used to allow a user to watch a previously-recorded program while simultaneously recording a new program.

The set-top box arrangement of FIG. 2 and the digital video recorder with a built-in set-top box arrangement of FIG. 3 are merely illustrative. Other arrangements may be used if desired. For example, user television equipment may be based on a WebTV box, a personal computer television (PC/TV), or any other suitable television equipment arrangement. If desired, the functions of components such as set-top box 204, recording device 302, a WebTV box, or PC/TV or the like may be integrated into a television or personal computer or other suitable device.

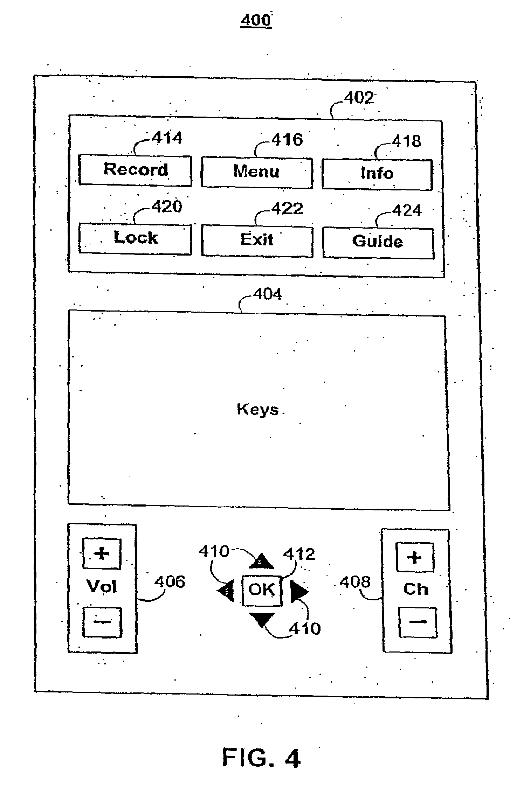

An illustrative remote control 400 for operating user television equipment 110 (FIG. 1) or suitable user computer equipment 112 is shown in FIG. 4. Remote control 400 is only illustrative and any other suitable user input interface may be used to operate user equipment (e.g., a mouse, trackball, keypad, keyboard, touch screen, voice recognition system, etc.). Remote control 400 may have function keys 402 and other keys 404 such as keypad keys, power on/off keys, pause, stop, fast-forward and reverse keys. Volume up and down keys 406 may be used for adjusting the volume of the audio portion of a video. Channel up and down keys 408 may be used to change television channels and to access content on virtual channels. Cursor keys 410 may be used to navigate on-screen menus. For example, cursor keys 410 may be used to position an on-screen cursor, indicator, or highlight (sometimes all generically referred to herein as a highlight or highlight region) to indicate interest in a particular option or other item on a display screen that is displayed by the interactive television application.

OK key 412 (sometimes called a select or enter key) may be used to select on-screen options that the user has highlighted.

Keys 402 may include RECORD key 414 for initiating recordings. MENU button 416 may be used to direct an interactive media guidance application to display a menu on the user's display screen (e.g., on television 208 or 304 or on a suitable monitor or computer display). INFO button 418 may be used to direct an interactive media guidance application to display an information display screen. For example, when a user presses INFO key 418 while video for a given television channel is displayed for the user, an interactive television program guide may display a FLIP/BROWSE overlay including program schedule information for the current program on the given television channel on top of the video. As another example, when a particular program listing in an interactive television program listings display screen is highlighted, the user pressing INFO button 418 may cause an interactive television program guide to provide additional program information associated with that program listing (e.g., a program description, actor information, schedule information, etc.).

LOCK button 420 may be used to modify access privileges. For example, a parent may use LOCK button 420 or on-screen options to establish parental control settings for the interactive media guidance application. The parental control settings may be time-based settings (e.g., to prevent a child from watching television during a particular time block, such as from 3:00 PM to 5:00 PM). The parental control settings may also be used to, for example, block programming based on rating, channel, and program title. A locked or blocked program (or other media) is typically not viewable until the interactive media guidance application is provided with a suitable personal identification number (PTN). Once this PIN has been entered, the interactive media guidance application will unlock the user's equipment and allow the locked content to be accessed.

EXIT button 422 may be used to exit the interactive media guidance application or to exit a portion of the interactive media guidance application (e.g., to cause an interactive television program guide to remove a FLIP, BROWSE, or other interactive television overlay from the display screen). GUIDE button 424 may be used to invoke an interactive television program guide (e.g., a program guide menu screen, program listings screen, or other program guide screen).

The keys shown in FIG. 4 are merely illustrative. Other keys or buttons may be provided if desired. For example, a music button may be used to access music with the interactive media guidance application. An edit button may be used to edit stored content (e.g., to remove commercials, remove portions of a video, etc.). Alphanumeric buttons may be used to enter alphanumeric characters. A last or back button may be used to browse backward in the interactive media guidance application (e.g., to return to a previous channel, web page, or other display screen). Video recorder function buttons such as a play button, pause button, stop button, rewind button, fast-forward button, and record button, may be used to control video recorder functions (local or network-based) in system 100 (FIG. 1). A help key may be used to invoke help functions such as context-sensitive on-screen help functions.

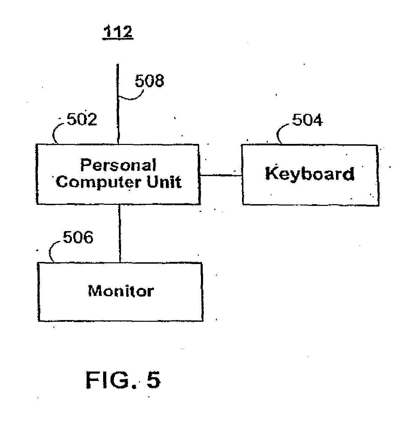

Illustrative user computer equipment 112 (FIG. 1) is shown in FIG. 5. User computer equipment 112 may be stand-alone or a part of home network 113 (FIG. 1). In the arrangement of FIG. 5, personal computer unit 502 may be controlled by the user using keyboard 504 and/or other suitable user input device such as a trackball, mouse, touch pad, touch screen, voice recognition system, or a remote control, such as remote control 400 of FIG. 4. Video content, such as television programming or web pages having video elements, and interactive media guidance application display screens may be displayed on monitor 506. Television and music programming, media guidance application data (e.g., television program guide data), video-on-demand content, video recordings played back from a network-based video recorder, and other data may be received from paths 118 and 138 (FIG. 1) using input/output 508. User commands and other information generated as a result of user interactions with the interactive media guidance application and system 100 (FIG. 1) may also be transmitted over input/output 508.

Personal computer unit 502 may contain a television or video card, such as a television tuner card, for decoding analog, digital, and high-definition television channels and for handling streaming video content. Multiple video cards (e.g., tuner cards) may be provided if desired. An illustrative television tuner card that may be used may contain an analog television tuner for tuning to a given analog channel, digital decoding circuitry for filtering out a desired digital television or music channel from a packetized digital data stream, and a high-definition television tuner for tuning to a high-definition channel. Any suitable card or components in computer unit 502 may be used to handle video and other content delivered via input/output line 508 if desired.

Personal computer unit 502 may contain one or more processors (e.g., microprocessors) that are used to run the interactive media guidance application or a portion of the interactive media guidance application.

Personal computer unit 502 may include a hard drive, a recordable DVD drive, a recordable CD drive, or other suitable storage device or devices that stores video, program guide data, and other content. The interactive media guidance application and personal computer unit 502 may use a storage device or devices to, for example, provide the functions of a digital video recorder.

User equipment, such as user equipment 108, user television equipment 110, user computer equipment 112, and user equipment located on home network 113 (FIG. 1), may be used with network equipment such as server 130, server 140, a home network server, and equipment at service providers such as service provider 142 of FIG. 1 to provide network-based video recording functions. Video recording functions may be provided by storing copies of television programs and other video content on a remote server (e.g., server 130 or server 140 or a home network server) or other network-based equipment, such as equipment at a service provider such as service provider 142.

Video recordings may be made in response to user commands that are entered at user equipment 108 or user equipment located on home.network 113 (FIG. 1). In a digital video recorder arrangement, the interactive media guidance application may be used to record video locally on the user equipment in response to the user commands. In a network-based video recorder arrangement, the interactive media guidance application may be used to record video or to make virtual recordings (described below) on network equipment such as server 130, server 140, a home network server, or equipment at service provider 142 in response to the user commands. The user commands may be provided to the network equipment over the communications paths shown in FIG. 1. The digital video recorder arrangement and the network-based video recorder arrangement can support functions such as fast-forward, rewind, pause, play, and record.

To avoid unnecessary duplication in a network-based video recorder environment, system 100 may provide network-based video recording capabilities by using virtual copies or recordings. With this approach, each user may be provided with a personal area on the network that contains a list of that user's recordings. The video content need only be stored once (or a relatively small number of times) on the network equipment, even though a large number of users may have that video content listed as one of their recordings in their network-based video recorder personal area. Personal settings or any other suitable data may be stored in a user's personal area on the network.

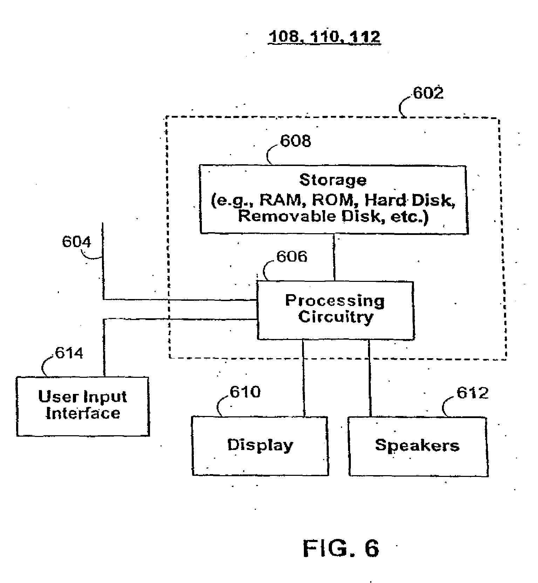

The user television equipment and user computer equipment arrangements described above are merely illustrative. A more generalized embodiment of illustrative user equipment 108, 110, and 112 (FIG. 1) and user equipment located on home network 113 (FIG. 1) is shown in FIG. 6. Control circuitry 602 is connected to input/output 604. Input/output 604 may be connected to one or more communications paths such as paths 114, 116, 118, 128, 136, and 138 of FIG. 1. Media (e.g., television programming, music programming, other video and audio, and web pages) may be received via input/output 604 (e.g., from programming sources 102, servers or other equipment, such as server 130, service providers such as service provider 142, distribution facility 104, etc.). Interactive media guidance application data, such as program schedule information for an interactive television program guide, may be received from data source 120 via input/output 604. Input/output 604 may also be used to receive data from data source 120 for other interactive television applications. The user may use control circuitry 602 to send and receive commands, requests, and other suitable data using input/output 604.

Control circuitry 602 may be based on any suitable processing circuitry 606 such as processing circuitry based on one or more microprocessors, microcontrollers, digital signal processors, programmable logic devices, etc. In some embodiments, control circuitry 602 executes instructions for an interactive media guidance application or other interactive application (e.g., web browser) from memory. Memory (e.g., random-access memory and read-only memory), hard drives, optical drives, or any other suitable memory or storage devices may be provided as storage 608 that is part of control circuitry 602. Tuning circuitry such as one or more analog tuners, one or more MPEG-2 decoders or other digital video circuitry, high-definition tuners, or any other suitable tuning or video circuits or combinations of such circuits may also be included as part of circuitry 602. Encoding circuitry (e.g., for converting over-the-air, analog, or digital signals to MPEG signals for storage) may also be provided. The tuning and encoding circuitry may be used by the user equipment to receive and display, play, or record a particular television or music channel or other desired audio and video content (e.g., video-on-demand content or requested network-based or local video recorder playback). Television programming and other video and on-screen options and information may be displayed on display 610. Display 610 may be a monitor, a television, or any other suitable equipment for displaying visual images. In some embodiments, display 610 may be HDTV-capable. Speakers 612 may be provided as part of a television or may be stand-alone units. Digital music and the audio component of videos displayed on display 610 may be played through speakers 612. In some embodiments, the audio may be distributed to a receiver (not shown), which processes and outputs the audio via speakers 612.

A user may control the control circuitry 602 using user input interface 614. User input interface 614 may be any suitable user interface, such as a mouse, trackball, keypad, keyboard, touch screen, touch pad, voice recognition interface, or a remote control.

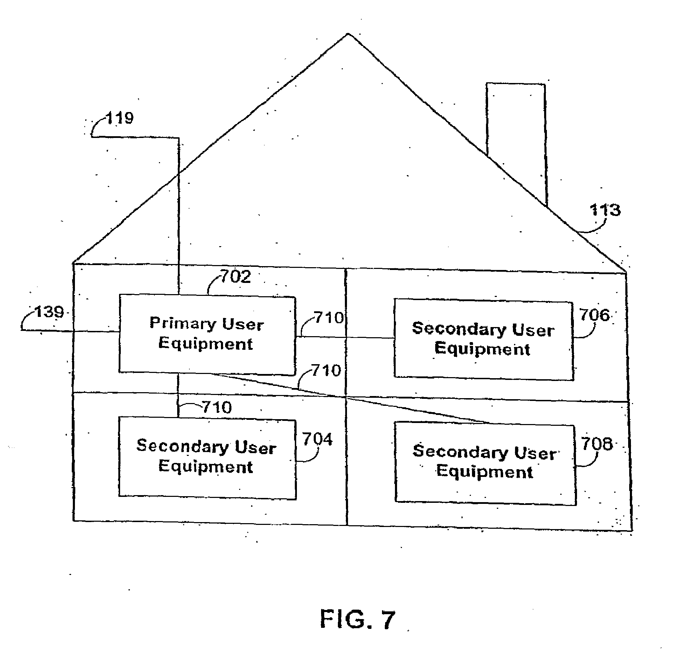

FIGS. 7, 8a, 8b, 8c, 9, and 10 show various illustrative home networks 113. The user equipment devices located on home network 113 may be able to share program data (such as program listings and program information), recorded content, program guide settings, and any other suitable data with other user equipment devices located on home network 113. Interactive television applications implemented on or accessible from user equipment devices located on home network 113 may be able to adjust program guide settings for interactive television applications implemented on or accessible from other user equipment devices located on home network 113.

FIG. 7 shows an illustrative home network 113 in accordance with the present invention. Home network 113 may include primary user equipment 702 and secondary user equipment 704, 706, and 708. Primary user equipment 702 may be connected to secondary user equipment 704, secondary user equipment 706, and secondary user equipment 708 via communication paths 710. Primary and secondary user equipment may each be any of user equipment 108, 110, and 112 (FIG. 1). Communications paths 710 may be any suitable communications path for in-home networks, such as wired paths, cable paths, fiber-optic paths, wireless paths, or a combination of such paths. Communications paths 119 and 139 may connect home network 113 to television distribution facility 104 (FIG. 1) and communications network 126 (FIG. 1), respectively, via primary user equipment 702. As shown, one or more pieces of secondary user equipment may be connected to primary user equipment 702 in a star configuration, if desired. User equipment devices may be located in different rooms within a home. For example, primary user equipment 702 may be placed in the parents' bedroom, secondary user equipment 708 may be placed in the children's room, secondary user equipment 704 may be placed in a living room, and secondary user equipment 706 may be placed in a guest room. With such an arrangement, the parents' bedroom may be used as a master location to adjust user settings for the program guides on the user equipment in the children's room and the other rooms.

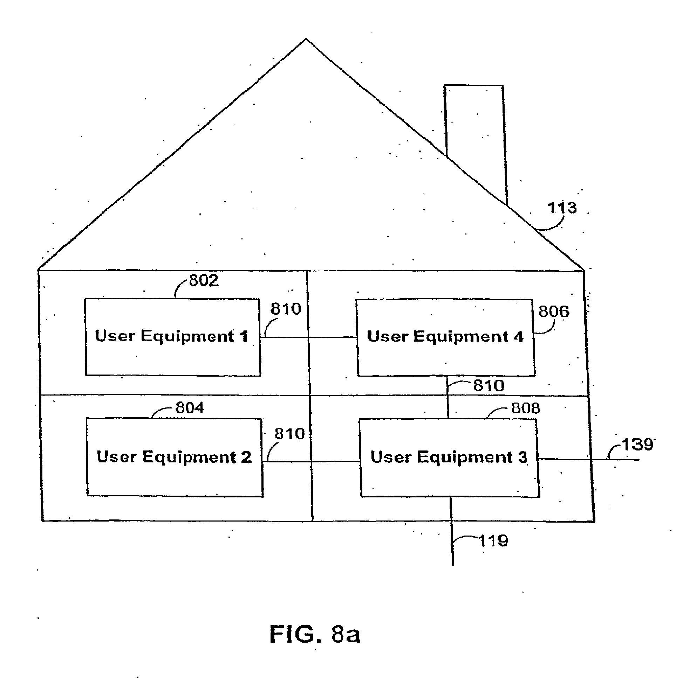

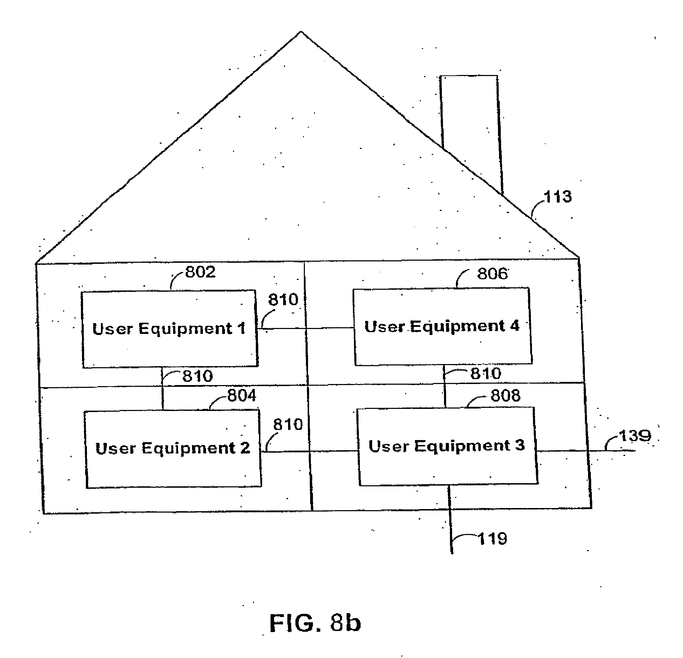

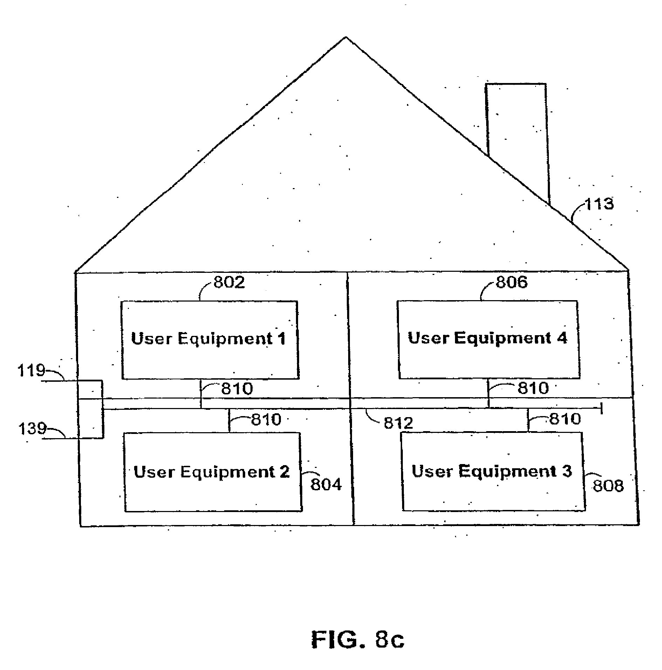

FIG. 8a is a diagram of an illustrative home network 113 in which a plurality of user equipment are implemented in a tree configuration in accordance with the present invention. Home network 113 may include user equipment 802, 804, 806, and 808, which are connected to each of the others via communications paths 810. User equipment 802, 804, 806, and 808 may each be any of user equipment 108, 110, and 112 (FIG. 1). It should be understood by one skilled in the art that not all of user equipment 802, 804, 806, and 808 may include recording devices (e.g., recording device 206 (FIG. 2) and recording device 302 (FIG. 3)). Communications paths 810 may be any suitable communications path for in-home networks, such as wired paths, cable paths, fiber-optic paths, wireless paths, or a combination of such paths. Two or more pieces of user equipment may be connected in this way. Communications paths 119 and 139 may connect home network 113 to television distribution facility 104 (FIG. 1) and communications network 126 (FIG. 1), respectively, via user equipment 808. Although, as illustrated, communications paths 119 and 139 are connected to user equipment 808, they could be connected to any one or more of user equipment 802, 804, 806, or 808. The equipment mentioned above may be placed in various rooms within a home. For example, user equipment 802 may be placed in a parents' bedroom, user equipment 804 may be placed in a children's room, user equipment 806 may be placed in a living room, and user equipment 808 may be placed in a guest room. With the arrangement of FIG. 8a, each piece of user equipment on home network 113 may communicate with each other piece of user equipment on home network 113 over communications paths 810. FIG. 8a shows home network 113 connected in a tree topology. If desired, this level of interconnectivity may be achieved using communications paths that are arranged in a ring configuration (FIG. 8b), bus configuration (FIG. 8c) or other suitable topology. Any of these topologies may use the types of communications paths described in connection with the arrangement of home network 113 shown in FIG. 8a. Home network 113 that is arranged in a bus topology may include bus 812 to interconnect the pieces of user equipment on home network 113 and communications paths 119 and 139.

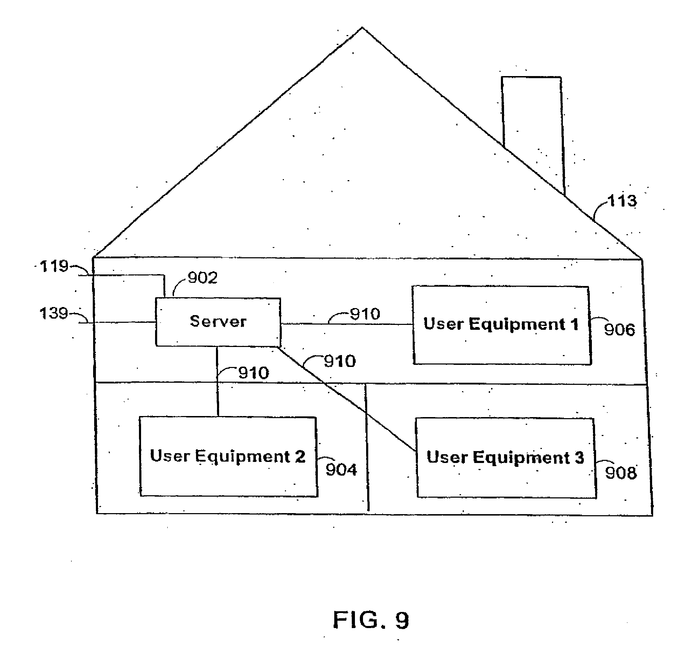

FIG. 9 shows an illustrative home network 113 based on a client-server architecture. Home network 113 may include server 902 and user equipment 904, 906, and 908. Server 902 may be connected to user equipment 904, 906, and 908 via communication paths 910. In some embodiments, server 902 may be embedded within one of the user equipment devices in home network 113. Communications paths 119 and 139 may connect home network 113 to television distribution facility 104 (FIG. 1) and communications network 126 (FIG. 1), respectively, via server 902. User equipment 904, 906, and 908 may each be any of user equipment 108, 110, and 112 (FIG. 1). User equipment 904, 906, and 908 and server 902 may be placed in various rooms within a home. For example, server 902 may be placed in a den, user equipment 904 may be placed in a children's room, user equipment 906 may be placed in a living room, and user equipment 908 may be placed in a parents' room. Communication paths 910 may be any suitable communications path for in-home networks, such as wired paths, cable paths, fiber-optic paths, wireless paths, or a combination of such paths.

As in the examples of FIGS. 8a, 8b, and 8c, different communications path arrangements such as buses, rings and the like, may be used to interconnect a server and user equipment on home network 113 based on a client-server architecture.

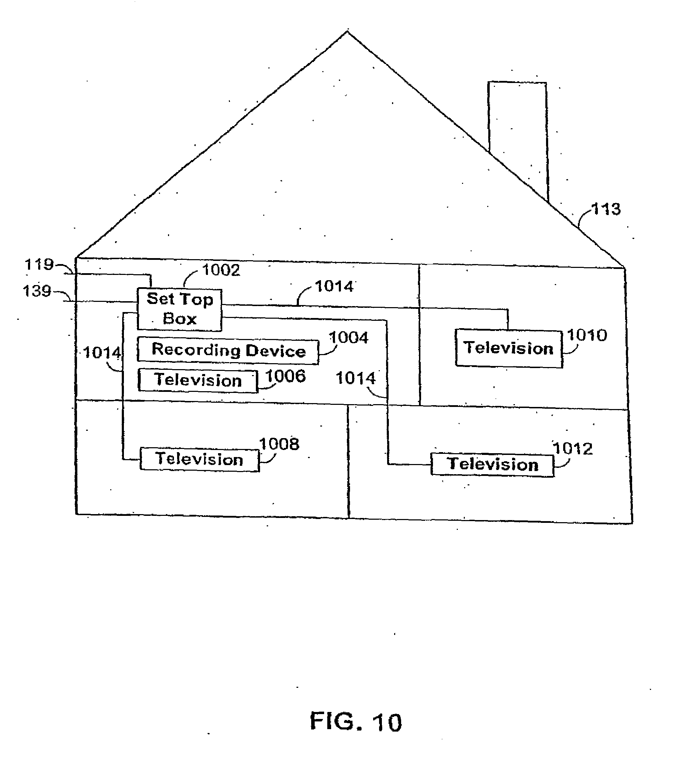

FIG. 10 shows an illustrative configuration of home network 113 based on a single set-top box. Home network 113 may include set-top box 1002, optional recording device 1004, and televisions 1006, 1008, 1010, and 1012. Set-top box 1002 may be similar to set-top box 204 (FIG. 2) Recording device 1004 may be similar to recording device 206 (FIG. 2). In one embodiment, the set top box 1002 and the recording device 1004 may be housed within a single box. Televisions 1006, 1008, 1010, and 1012 may be similar to television 208 (FIG. 2). Set-top box 1002 may be connected to recording device 1004 and televisions 1008, 1010, and 1012 via communication paths 1014. Recording device 1004 may be connected to television 1006. If desired, any combination of televisions with or without recording devices may be connected in a similar manner. The set-top box, recording device and televisions of FIG. 10 may be placed in different rooms within a home. For example, set top box 1002, recording device 1004 and television 1006 may be placed in a parent's bedroom, television 1008 may be placed in a children's room, television 1010 may be placed in a living room, and television 1012 may be placed in a guest room. Communication paths 1014 may be any suitable communications path for in-home networks, such as wired paths, cable paths, fiber-optic paths, wireless paths, satellite paths, or a combination of such paths. Communications paths 119 and 139 may connect home network 113 to television distribution facility 104 (FIG. 1) and communications network 126 (FIG. 1), respectively, via set top box 1002.
We should also disclose the embodiment in which each user equipment in the home has an independent logical connection over the communication network to the television distribution facility or other central location. In this configuration, communications between equipment in the home may pass through the central location. For example, for the user equipment in the parents' bedroom to send a control command to the user equipment in the children's bedroom, the message is sent to a central server, which then routes it the children's equipment. In this embodiment, there is no need for an in-home network.

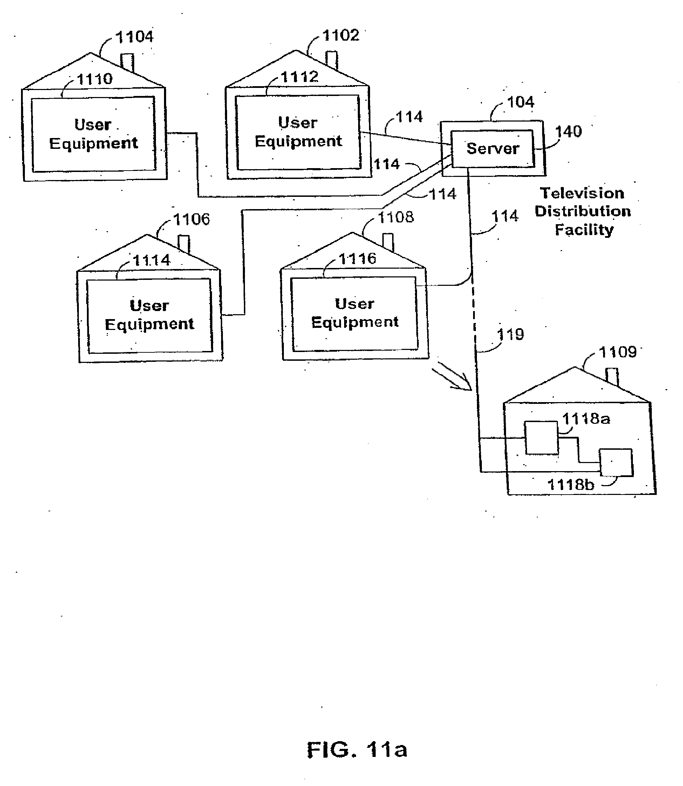

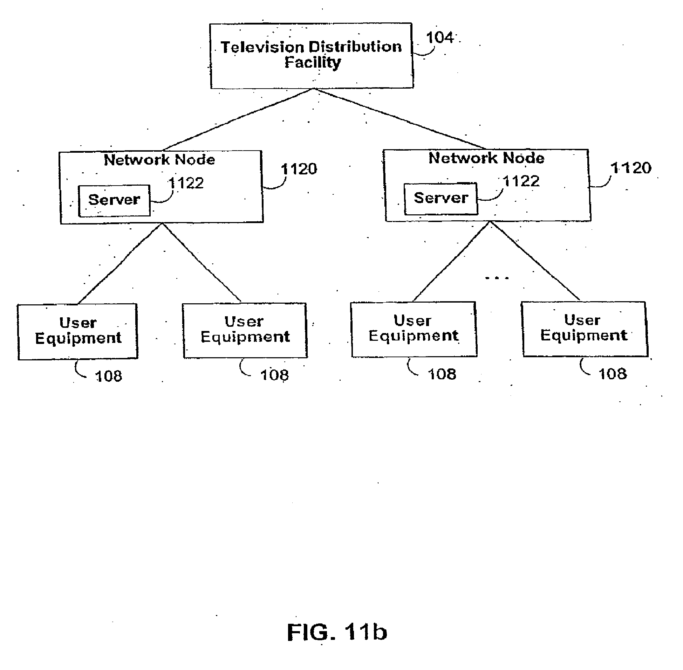

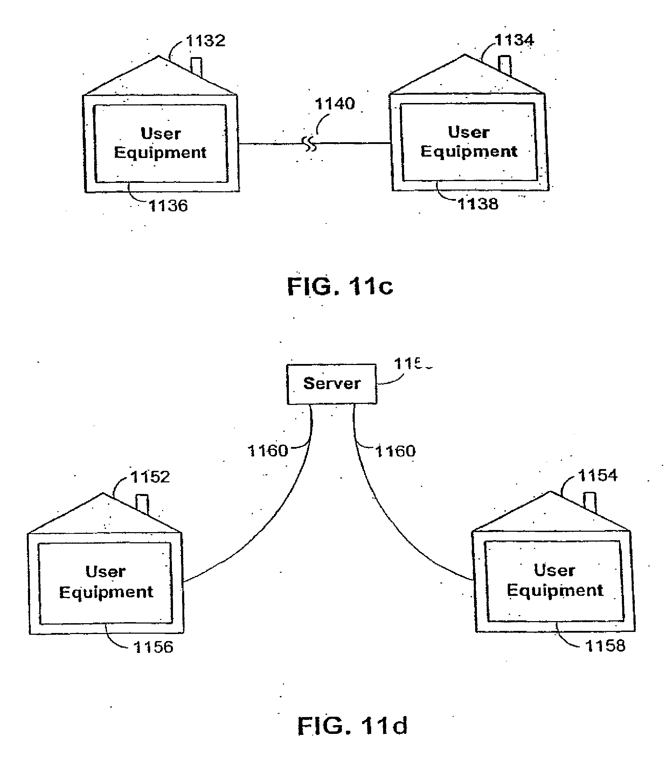

FIGS. 11a, 11b, 11c, and 11d show illustrative configurations of connections between home networks and television distribution facility 104 (FIG. 1). Only one user equipment device is shown on the home networks in FIGS. 11b 11c, and 11d to avoid over-complicating the drawings. However, the home networks shown in FIGS. 11a, 11b, 11c, and 11d may contain multiple pieces of user equipment configured as shown in FIGS. 7, 8a, 8b, 8c, 9, or 10.

FIG. 11a shows an illustrative configuration in which multiple homes are connected to a common server. Server 140 (FIG. 1) may be located at television distribution facility 104 (FIG. 1). Television distribution facility 104 may be at or may be one of private home, a commercial building, a network node, or other suitable structure that may be connected to a plurality of homes. In the example of FIG. 11a, server 140 is connected to user equipment 1110, 1112, 1114, and 1116 that is located in homes 1004, 1002, 1106, and 1108, respectively via communication paths 114 (FIG. 1). When multiple user equipment devices exist within a home, such as home 1109, as shown by devices 1118a and 1118b, each user equipment device may communicate with the server 140 independently via communication paths 119 (FIG. 1). Alternatively, only one device may communicate with server 140 while the other device communicates via a home network. In other words, in separate arrangements, there are any of 1) multiple connections to server 140 and each user equipment device communicates with server 140 independently with no need for an in-home network (with all in-home communications passing through server 140), 2) only one connection to server 140 and each user equipment device communicates with each other through an in-home network, or 3) each user equipment device communicates with server 140 and with each other through an in-home network.

As shown in FIG. 11b, the capabilities of server 140 (FIG. 1) may be provided using servers 1122 located at network nodes 1120. Servers, such as servers 1122, may be used instead of server 140 or may be used in conjunction with a server 140 located at television distribution facility 104 (FIG. 1). Servers 1122 may be connected to one or more user equipment 108 (FIG. 1). Servers 1122 may also be connected to one or more home networks, such as, for example home network 113 (FIG. 1).

As shown in FIG. 11c, user equipment in different homes may be connected by communications links. For example, user equipment 1136 may be connected to user equipment 1138 via link 1140. Link 1140 may be a wired or wireless link. In this manner, home 1132 and home 1134 may share program guide settings and recorded content. Home networks located in different homes may also be interconnected in this manner. In some embodiments, a group of homes (i.e., more than two homes) may also be connected to share program guide settings and recorded content. A tree, ring, or bus configuration may be used to connect the group of homes.

As shown in FIG. 11d user equipment in different homes may be connected via an outside server. For example, user equipment 1156 may be connected to user equipment 1158 via server 1150. Communication paths 1160 may be a wired or wireless path. In this manner, home 1152 and home 1154 may share program guide settings and recorded content. Home networks located in different homes may also be interconnected in this manner. In some embodiments, a group of homes (i.e., more than two homes) may also be connected to server 1150 to share program guide settings and recorded content. A tree, ring, or bus configuration may be used to connect the group of homes and server 1150.

User equipment devices may be designated as belonging to a group of user equipment devices. The group of user equipment devices may include any number of user equipment devices 108 (FIG. 1), user television equipment devices 110 (FIG. 1), and user computer equipment devices 112 (FIG. 1). The user equipment devices belonging to the group may or may not include recording devices. Preferably, at least one of the user equipment devices belonging to the group includes a recording device or is configured to record content on a ,server (e.g., server 140 (FIG. 1)). In some embodiments, a user equipment device may belong to more than one group.

Some of the user equipment devices belonging to a group may reside on a home network, which may be arranged in any suitable configuration, including the configurations shown in FIGS. 7-10. The user equipment devices may also include home network servers, such as, for example, server 902 (FIG. 9). Some of the user equipment devices belonging to the group may be located in different homes. Examples of multiple home configurations are shown in FIGS. 11a-d. For example, several user equipment devices in a group may be part of a home network or located in a home at "103 Oak Street", while another user equipment device in the group may be located in a home at "110 Main Street".

User equipment devices that are part of a group may be configured to share content, such as, for example, recorded television programs, music, pictures, and video clips. In some embodiments, the content may be stored in a distributed manner on the user equipment devices. A user equipment device belonging to the group may request and access the content from the user equipment device on which the requested content is stored. Using a user equipment device to access content stored on another user equipment device is discussed in greater detail in Ellis et al. U.S. Patent Application No. 09/354, 344, filed July 16, 1999, which is hereby incorporated by reference herein in its entirety. In some embodiments, the content may be stored on a central server, such as, for example, server 130 or 140 (FIG. 1). A user equipment device belonging to the group may request and access the content from the server.

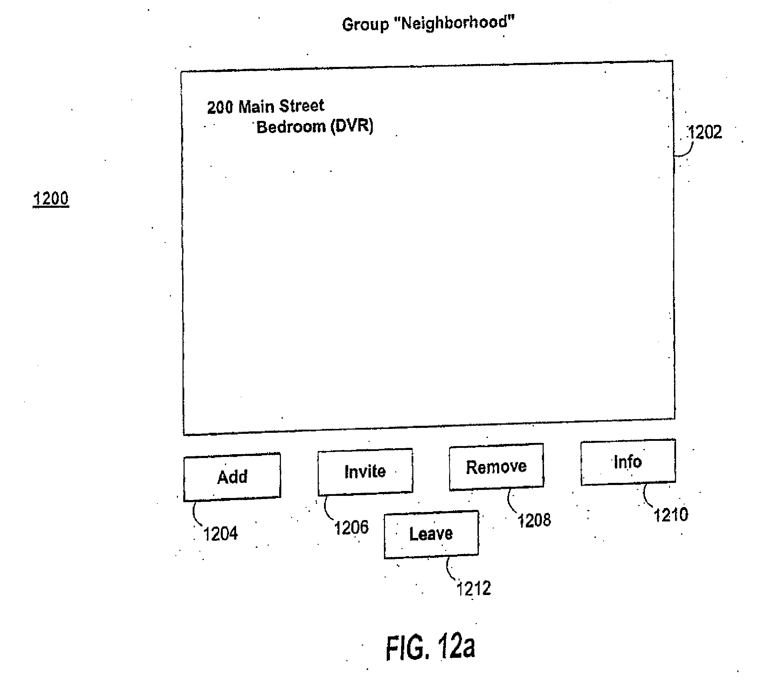

FIG. 12a shows an illustrative display screen 1200 of an interactive media guidance application for managing a group of user equipment devices in accordance with the present invention. The interactive media guidance application may initially display screen 1200 in response to a user creating a group. Screen 1200 may include the name of the group designated by the user (e.g., "Neighborhood"). Screen 1200 may also include user equipment device display area 1202, add button 1204, invite button 1206, remove button 1208, information button 1210, and leave button 1212. The features of screen 1200 will be discussed in greater detail below in connection with FIGS. 12a-q. In some embodiments, the entry of a PIN or password or some other form of user authentication may be required to access some or all of the functions of these screens.

User equipment device display area 1202 may include a listing of user equipment devices that are part of the group. The user equipment device from which the user created the group may be automatically added to the group upon the creation of the group. As shown in FIG. 12a, user equipment device display area 1202 only contains a listing for a single home (200 Main Street) having a single user equipment device (Bedroom). The listing of user equipment devices may indicate whether user equipment devices in the group include recording devices, such as digital video recorders (DVRs). In some embodiments, all of the user equipment devices in the user's home may be added to the group upon the creation of the group. The name of the home may be any suitable identifier, such as the address, the name of the family living there, a name assigned by the user, or any other suitable name. The name used for individual user equipment may be any suitable identifier, such as the name of the room in which it is used or a name assigned by the user. The name of the network, the name of the homes within the network, and the names of the equipment in the home may be consistent across all users in the group, or different names may be assigned by different users.

Upon creation of the group, the interactive media guidance application may create a list of user equipment devices that defines the group. Initially, the list may only include the user equipment device from which the group was created (or, for example, all of the user equipment devices in the same home). As more user equipment devices become part of the group, the list may be updated to include the additional user equipment devices. The list may be stored on any suitable device, including the user equipment device in the group, any servers to which the user equipment device is connected, and the service provider (e.g., service provider 142 (FIG. 1)). Copies of the list (or portions of the list) may be stored on multiple devices. The list may refer to the user equipment devices in the group using any suitable identifier including, name, serial number, network address, and any other suitable identifying information for user equipment devices.

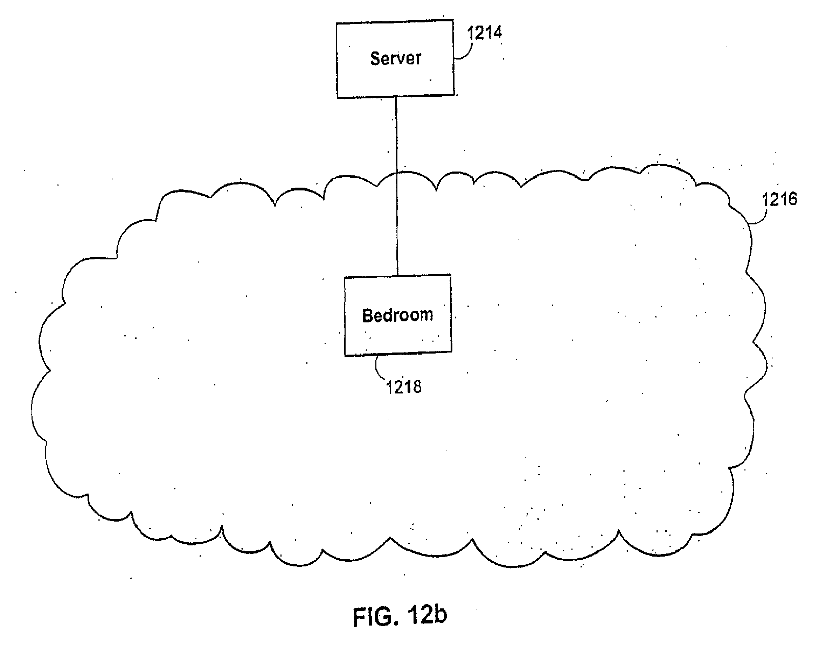

FIG. 12b shows an illustrative system diagram of a newly-created group 1216 in accordance with the present invention. As shown in FIG. 12b, group 1216 may be connected to a server 1214 over any suitable communications path, such as, for example, communications paths 114, 116, 118, 119, 128, 136, 138, and 139 (FIG. 1). Server 1214 may be server 140 (FIG. 1) that is located at television distribution facility 104 (FIG. 1) or server 130 (FIG. 1) that is accessible over communications network 126 (FIG. 1). Initially, group 1216 may only include user equipment device 1218, from which the user accessed an interactive media guidance application to create the group.

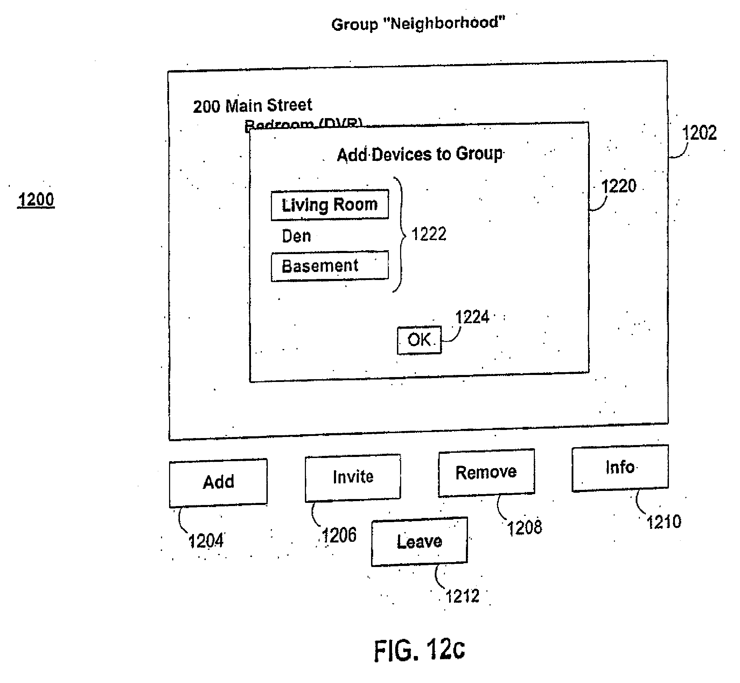

FIG. 12c shows an illustrative display screen 1200 of an interactive media guidance application for adding user equipment devices to the group in accordance with the present invention. Screen 1200 of FIG. 12c may be displayed in response to a user selecting add button 1204 from screen 1200 of FIG. 12a. Screen 1200 of FIG. 12c may include an overlay 1220, which may include a listing of user equipment devices 1222 and OK button 1224.

Listing 1222 may include other user equipment devices located in the user's home network. If the user equipment device is not located on a home network, then the interactive media guidance application may not display overlay 1220. In some embodiments, the interactive media guidance application may determine the other user equipment devices in the user's home network by accessing a list of user equipment devices that is stored on the user's home network. In some embodiments, the interactive media guidance application may determine the other user equipment devices in the user's home network by detecting activity from other user equipment devices in the home network. In some embodiments, the interactive media guidance application may determine the other user equipment devices in the user's home network by "pinging" different network addresses and identifying the user equipment devices that respond to the "pings". In some embodiments, the interactive media guidance application may determine the other user equipment devices in the user's home network using information retrieved from a remote server, such as server 1214.

As shown-in FIG. 12c, listing 1222 includes a "Living Room" user equipment device, a "Den" user equipment device, and a "Basement" user equipment device. The interactive media guidance application may allow the user to select any one or more of the listed user equipment devices to be added to the group. As shown in FIG. 12c, the user has selected the "Living Room" and "Basement" user equipment devices. In response to the user selecting OK button 1224, the interactive media guidance application may configure the selected user equipment devices to be part of the group. In some embodiments, when user equipment devices are added to the group the functions that may be performed using that equipment may be restricted. The entry of a PIN or password or other form of authentication may be required to add user equipment devices to a group.

The interactive media guidance application may update the list of user equipment devices that define the group to include the added user equipment devices. In some embodiments, the updated list may also be copied on the added user equipment devices. In addition, the interactive media guidance applications implemented on the added user equipment devices may enable the added user equipment devices to share content with the other user equipment devices in the group. The interactive media guidance application may update user equipment device display area 1202 to include the added user equipment devices.

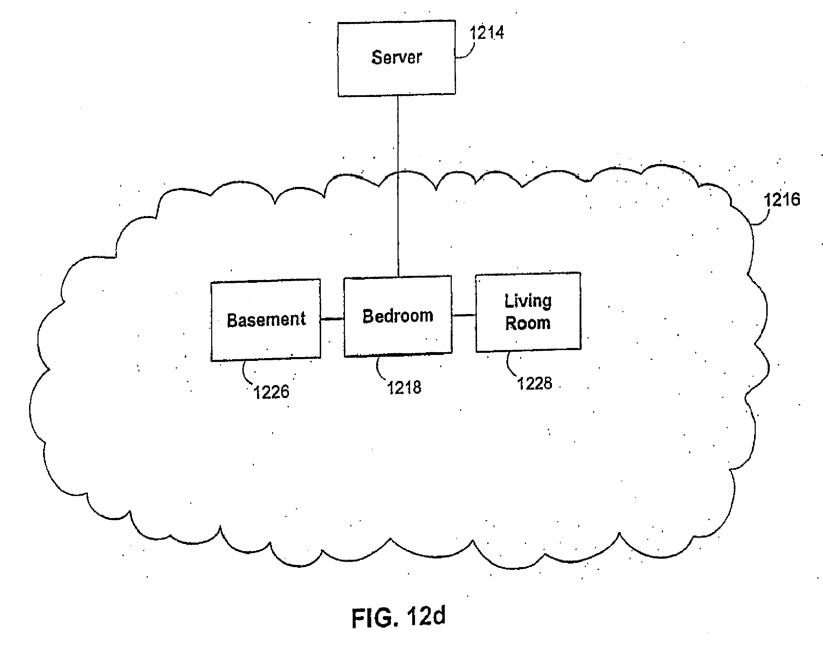

FIG. 12d shows an illustrative system diagram of group 1216 after user equipment devices have been added to the group in accordance with the present invention. As shown in FIG. 12d, group 1216 includes user equipment device 1218 as well as user equipment devices 1226 and 1228, which were added to the group. The configuration of the home network may be preserved to allow user equipment devices 1218, 1226, and 1228 to share content with other user equipment devices in the group, even if not all of the user equipment devices in the home network belong to the group. For example, if the configuration of the home network requires that one of the user equipment devices in the home network relays content to the other user equipment devices in the home network, that user equipment device may still relay group-related content to the other user equipment devices in the group, even if it is not a part of the group.

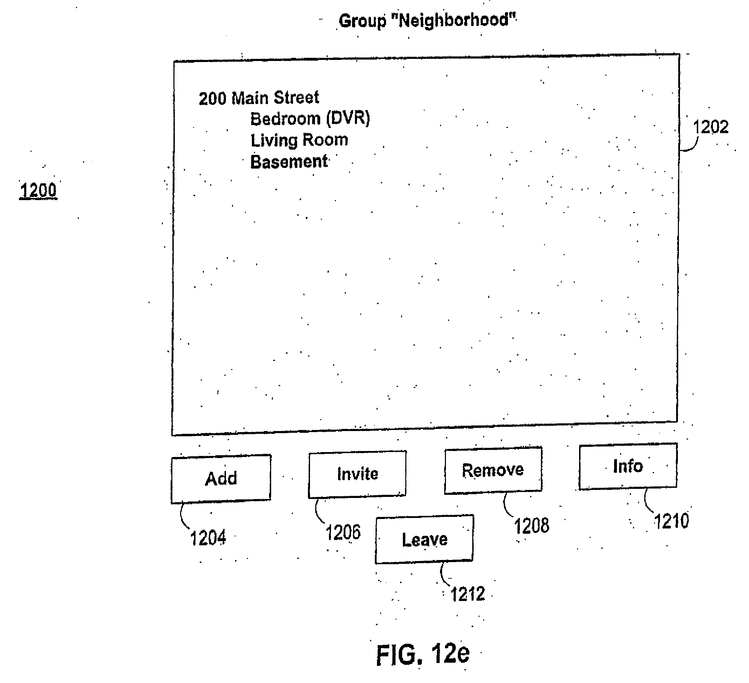

FIG. 12e shows an illustrative display screen 1200 of an interactive media guidance application that has been updated to include added user equipment devices in accordance with the present invention. Screen 1200 of FIG. 12e may be displayed in response to the user selecting user equipment devices to add to the group and pressing OK button 1224 (FIG. 12c). In particular, user equipment devices "Living Room" and "Basement" that were selected to be added to the group are displayed in user equipment device display area 1202.

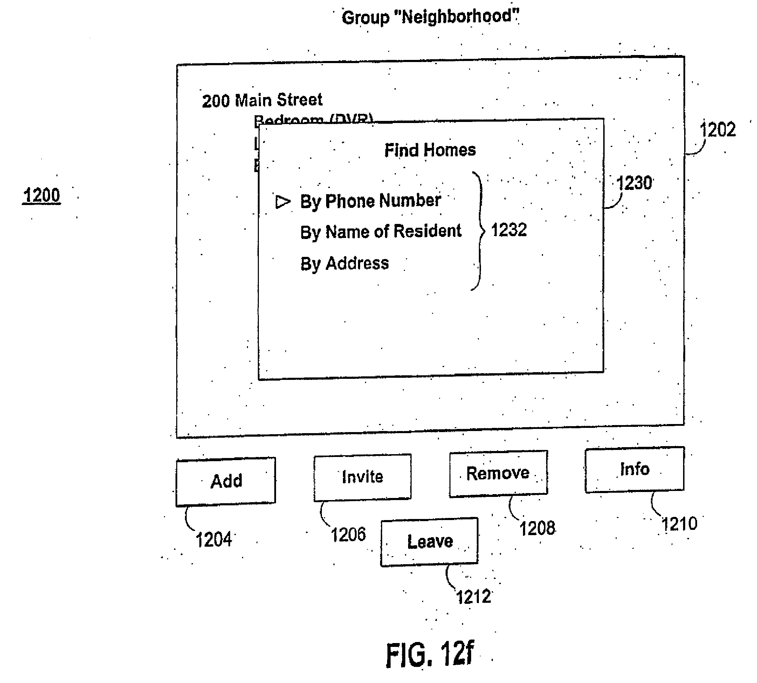

FIGS. 12f-g show an illustrative display screen 1200 of an interactive media guidance application for finding homes to invite to join the group in accordance with the present invention. Screen 1200 of FIG. 12f may include an overlay 1230 for finding homes of users. Overlay 1230 may include a listing of search criteria 1232, which may include, for example, phone numbers, addresses, names, and any other suitable search criteria. The use of a PIN or password or other form of authentication may be required to invite other homes to join the group.

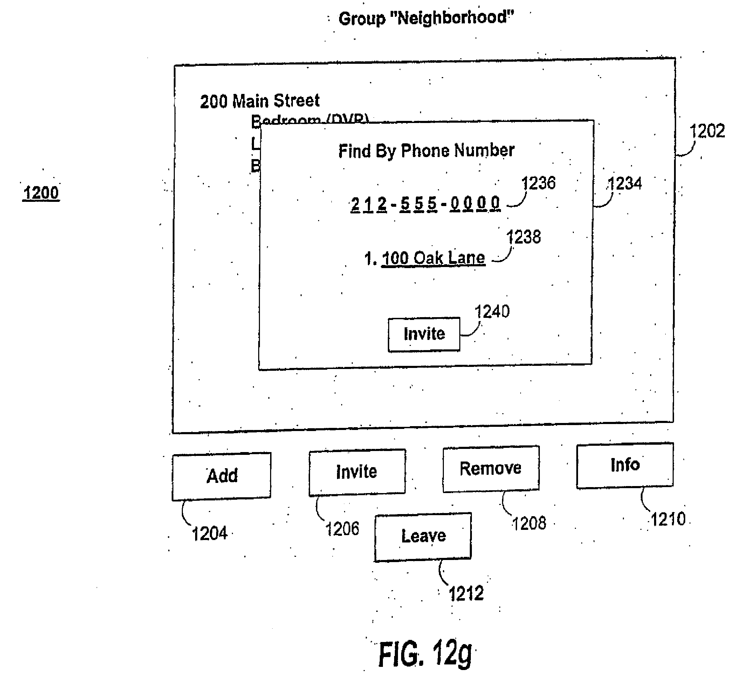

In response to the user selecting one of the search criteria, the interactive media guidance application may display screen 1200 of FIG. 12g. Screen 1200 of FIG. 12g may include an overlay 1234 for searching for homes of users based on the selected criteria. Overlay 1234 may include a search criteria entry area 1236, search results listing 1238, and invite button 1240.

The interactive media guidance application may allow the user to enter search criteria in search criteria entry area 1236. As shown in FIG. 12g, the search criteria is a phone number. In response to the user entering search criteria in search criteria entry area 1236, the interactive media guidance application may send a search request to, for example, service provider 142. Service provider 142 may search its records for other subscribers in its database that meet the search criteria. Service provider 142 may send the interactive media guidance application a list of homes that meet the search criteria. The interactive media guidance application may display the received list of search results in search results listing 1238.

In some embodiments, users of interactive media guidance applications may opt out of being included in search results. For example, a user may wish to opt out of being included in search results if the user does not wish to be invited to join a group. As a result, even if a user's home meets the search criteria, service provider 142 may not include the user's home in search results if the user has opted out of being included in search results.

The interactive media guidance application may allow the user to select one of the listed search results and in response to the user selecting invite button 1240, the interactive media guidance application may send an invitation to the invited home to join the user's group. In some embodiments, the invitation may be sent to server 1214 (FIG. 12d), which relays the invitation to one of the user equipment devices at the selected home.

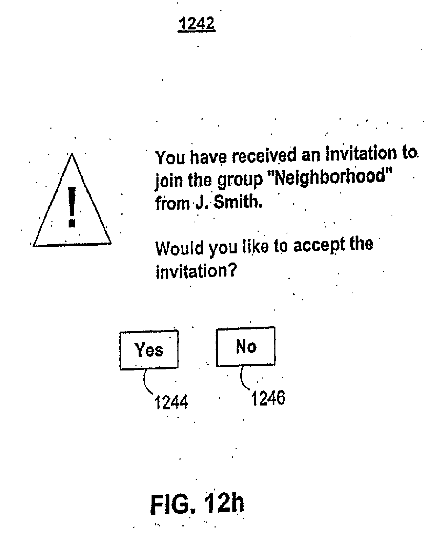

FIG. 12h shows an illustrative display screen 1242 of an interactive media guidance application that displays an invitation to join a group in accordance with the present invention. The interactive media guidance application implemented on one of the user equipment devices in a home may display screen 1242 in response to the home being invited to join a group. Screen 1242 may include a descriptive message that provides a user at the invited home with details of the group. For example, the details may include the name of the inviter, the name of the group, a description of the group, a personal message from the inviter, and any other suitable details. In some embodiments, the entry of a password or PIN or other form of authentication may be required to accept the invitation. In some embodiments, at the time of response or at some other suitable time the responder may be allowed to restrict which functions the inviter may be allowed to perform with respect to the responding household.

In response to the user selecting yes button 1244, the interactive media guidance application may accept the invitation by transmitting a message to the interactive media guidance application implemented on the user equipment device from which the invitation was sent. In response to the user selecting no button 1246, the interactive media guidance application may reject the invitation by transmitting a message to the interactive media guidance application implemented on the user equipment device from which the invitation was sent.

In some embodiments, if the user accepts the invitation, none of the user equipment devices associated with the invited home may be part of the group until the user configures user equipment devices associated with the invited home to be part of the group (e.g., until the user selects user equipment devices and add button 1204 from screen 1200). In some embodiments, if the user accepts the invitation, the user equipment device from which the invitation was accepted may automatically be added to the group. In some embodiments, all of the user equipment devices in the invited home are automatically added to the group.

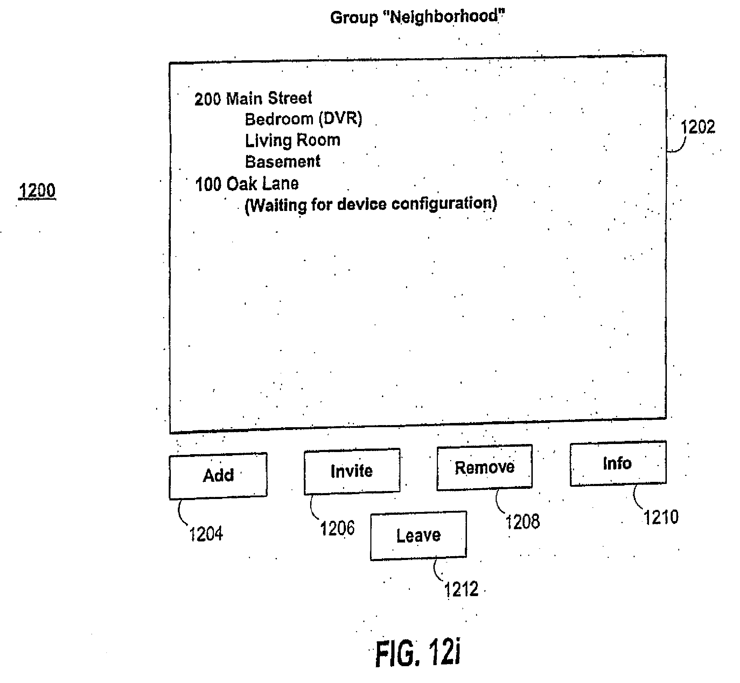

FIG. 12i shows an illustrative display screen 1200 of an interactive media guidance application that has been updated to include the added home in accordance with the present invention. As shown in FIG. 12i, user equipment device display area 1202 includes a listing for the home "100 Oak Lane", which accepted an invitation to join the group. The user equipment devices located in the added home may not be displayed until a user at the added home configures them to be part of the group. The user equipment devices listed in user equipment device listing area 1202 may be organized by the home or home network in which they are located. In some embodiments, the individual user equipment devices within a home network may be not be displayed and are hidden from users outside of that home network.

A user at the added home may configure user equipment devices located in the added home to be part of the group. In particular, an interactive media guidance application implemented on any of the user equipment devices located in the added home may allow the user to select user equipment devices to be added to the group. In response to the user selecting to add the selected user equipment devices to the group (e.g., using add button 1204 (FIG. 12a)), the list of user equipment devices that defines the group may be updated to include the added user equipment devices. In some embodiments, the user may choose a subset of functions to be made available to users in other locations on some or all of the added user equipment devices. In some embodiments, the updated list may be copied onto the added user equipment devices. In addition, the interactive media guidance application implemented on the added user equipment devices may enable the added user equipment devices to share content with the other user equipment devices in the group.

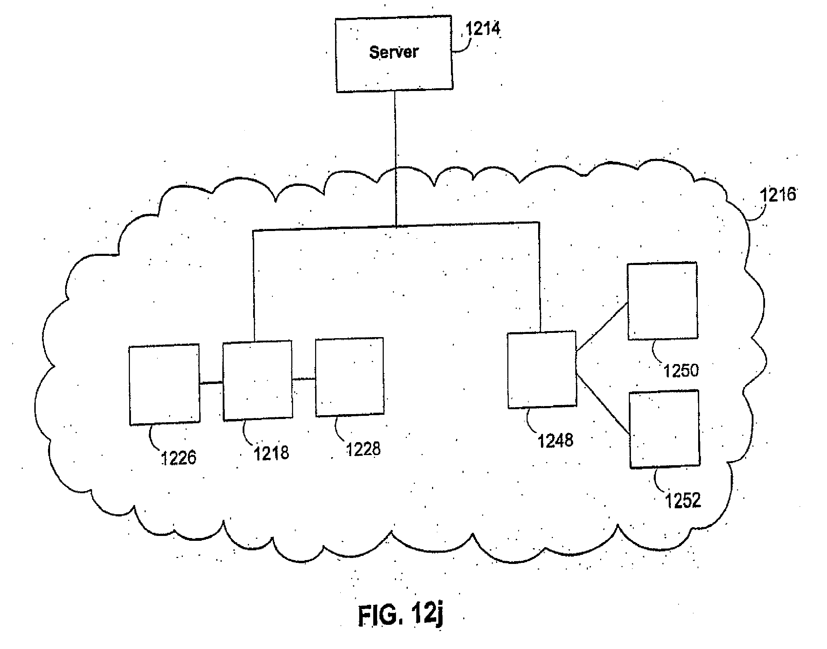

FIG. 12j shows an illustrative system diagram of group 1216 after a home and its associated user equipment devices have been added to the group in accordance with the present invention. As shown in FIG. 12j, in addition to including user equipment devices 1218, 1226, and 1228, group 1216 may also include user equipment devices 1248, 1250, and 1252 that are located in the added home. The network configuration of the added home may be maintained to allow user equipment device 1248, 1250, and 1252 to share content with the group.

In addition to inviting homes to join groups, users at homes may also request to join groups from interactive media guidance applications. For example, an interactive media guidance application may allow a user to browse a list of groups and send a request to join one of the listed groups. In some embodiments, the interactive media guidance application may only allow the user to select groups that are connected to the same server as the server to which the user's user equipment device is connected. In some embodiments, a user may send the request to join a group to any member of the group. In some embodiments, a user may only send the request to a specific group member, such as the group creator or the group owner.

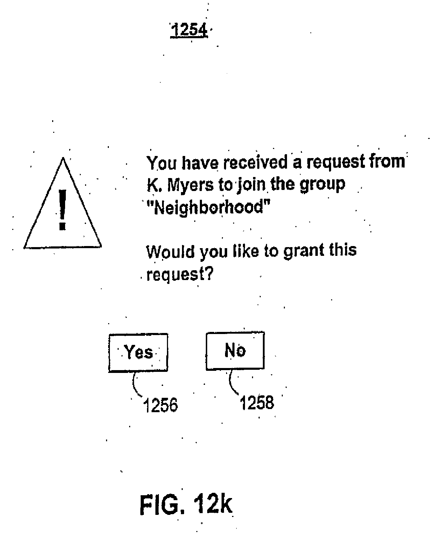

FIG. 12k shows an illustrative display screen 1254 of an interactive media guidance application that displays a request to join the group in accordance with the present invention. The interactive media guidance application implemented on one of the user equipment devices in the group may display screen 1254 in response to receiving a request to join the group. Screen 1254 may include a descriptive message that provides a user at one of the user equipment devices in the group with details regarding the request. For example, the details may include the name of the requestor, a personal message from the requestor, and any other suitable details.

In response to the user selecting yes button 1256, the interactive media guidance application may accept the request by transmitting a message to interactive media guidance application implemented on the user equipment device from which the request was sent. In response to the user selecting no button 1258, the interactive media guidance application may reject the request by transmitting a message to interactive media guidance application implemented on the user equipment device from which the request was sent.

In some embodiments, if the user accepts the request to join the group, none of the user equipment devices associated with the accepted home may be part of the group until the user equipment devices are configured to be part of the group (e.g., using add button 1204 on screen 1200).

In some embodiments, if the user accepts the request to join the group, the user equipment device from which the request was sent may automatically be added to the group. In this embodiment, the interactive media guidance application from which the request was accepted may update the list of user equipment devices that define the group to include the user equipment device from which the request was sent. The updated list may also be copied on the user equipment device from which the request was sent. In addition, the interactive media guidance application from which the request was sent may enable the user equipment device from which the request was sent to share content with the other user equipment devices in the group. In some embodiments, all of the user equipment devices in the accepted home may be automatically added to the group.

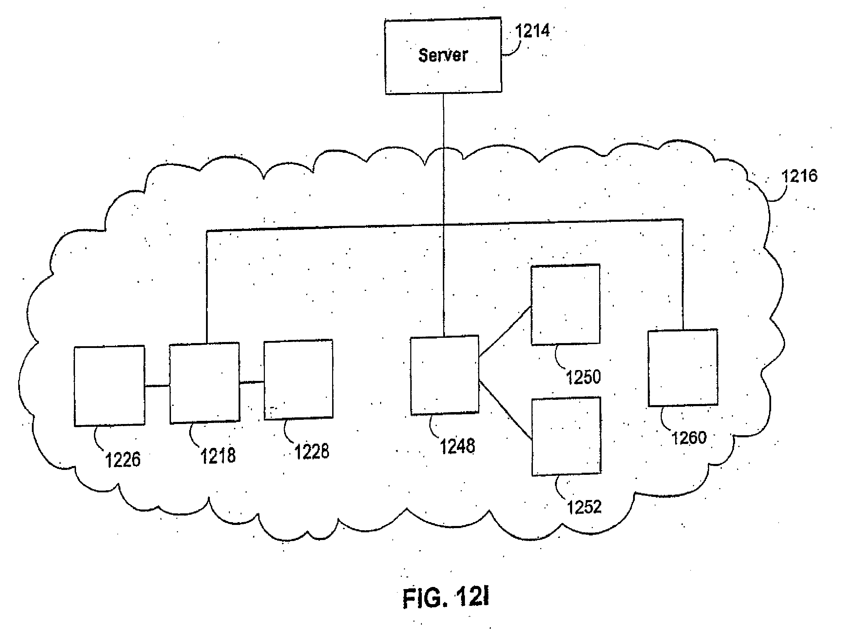

FIG. 12l shows an illustrative system diagram of group 1216 after a request to join the group has been accepted in accordance with the present invention. As shown in FIG. 12l, as a result of accepting the request from user equipment device 1260 to join the group, group 1216 may include user equipment device 1260. In some embodiments, group 1216 may not include any user equipment devices from the requesting home until a user at the requesting home configures user equipment devices in the requesting home to be a part of the group. If user equipment device 1260 is part of a home network, an interactive media guidance application implemented on user equipment device 1260 may allow a user to add the other devices in the home network to the group.

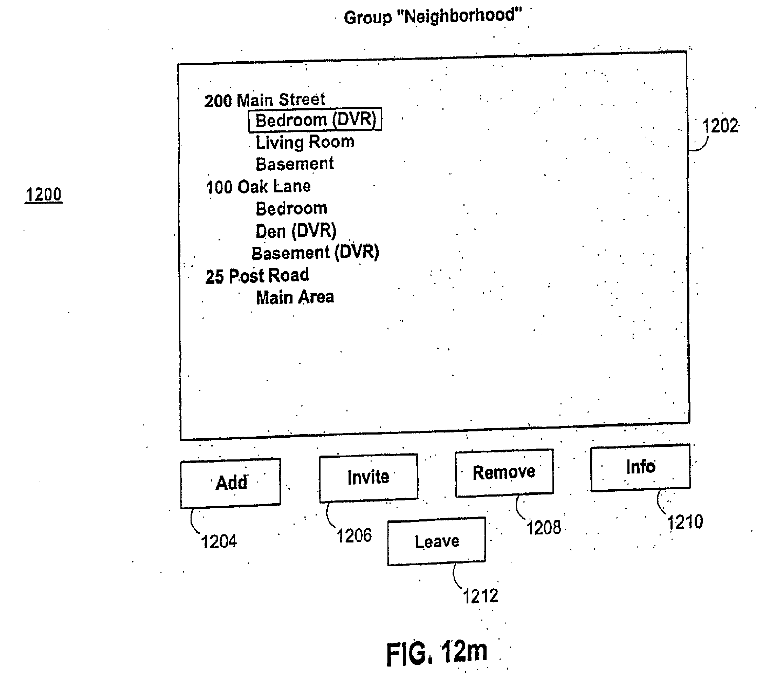

FIG. 12m shows an illustrative display screen 1200 of an interactive media guidance application for removing one of the user equipment devices from the group in accordance with the present invention. As shown in FIG. 12m, user equipment device display area 1202 has been updated to include user equipment devices from the home that accepted the invitation to join the group and the home whose request to join the group was accepted. In some embodiments, a user may elect to hide the user equipment devices located in the user's home from appearing in user equipment device display area 1202. For example, the interactive media guidance application may display a listing for "100 Oak Lane" without any accompanying user equipment devices. In this approach, other users may not be able to determine which user equipment devices from "100 Oak Lane" are configured to share content with the group.

The interactive media guidance application may allow the user to select one or more of the user equipment devices in the user's home for removal. As shown in FIG. 12m, the user has selected to remove the user equipment device "Bedroom" from the group. In response to the user selecting remove button 1208, the interactive media guidance application may update the list of user equipment devices that defines the group to remove the selected user equipment device. The interactive media guidance application may also remove the selected user-equipment device from user equipment device display area 1202. In addition, the interactive media guidance application implemented on the selected user equipment device may disable the ability of the selected user equipment device to share content with the group. Similarly, users at "100 Oak Lane" may select any of the "Bedroom", "Den", and "Basement" user equipment devices for removal from the group.

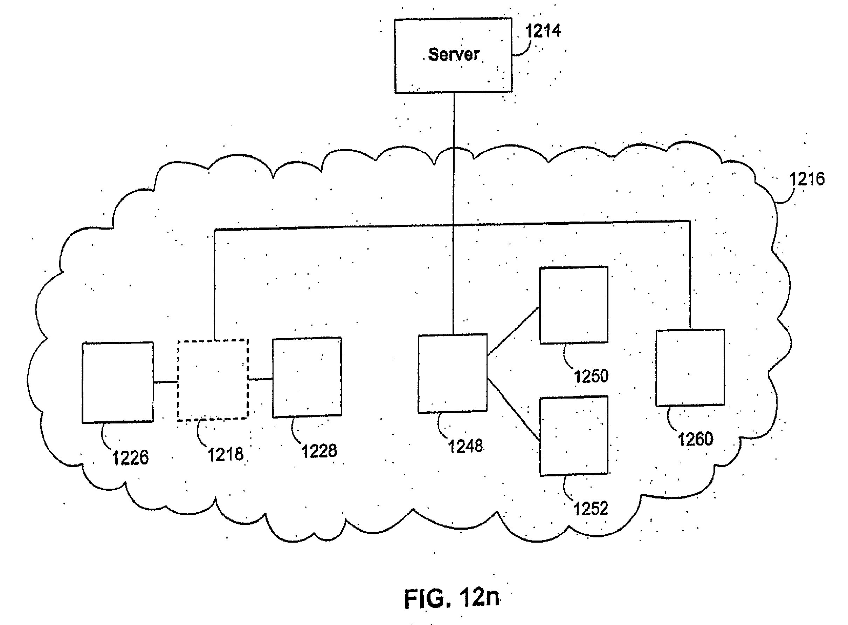

FIG. 12n shows an illustrative system diagram of group 1216 after a user equipment device has been removed from the group in accordance with the present invention. As shown in FIG. 12n, user equipment device 1218 which corresponds to the "Bedroom" user equipment device that was selected to be removed, is no longer a part of the group. In this case, user equipment device 1218 is relied upon by user equipment devices 1226 and 1228 to communicate with servers and user equipment devices outside of the home network. Although user equipment device 1218 is removed from the group, it may still be used to provide content to user equipment devices that are still a part of the group (e.g., user equipment devices 1226 and 1228.

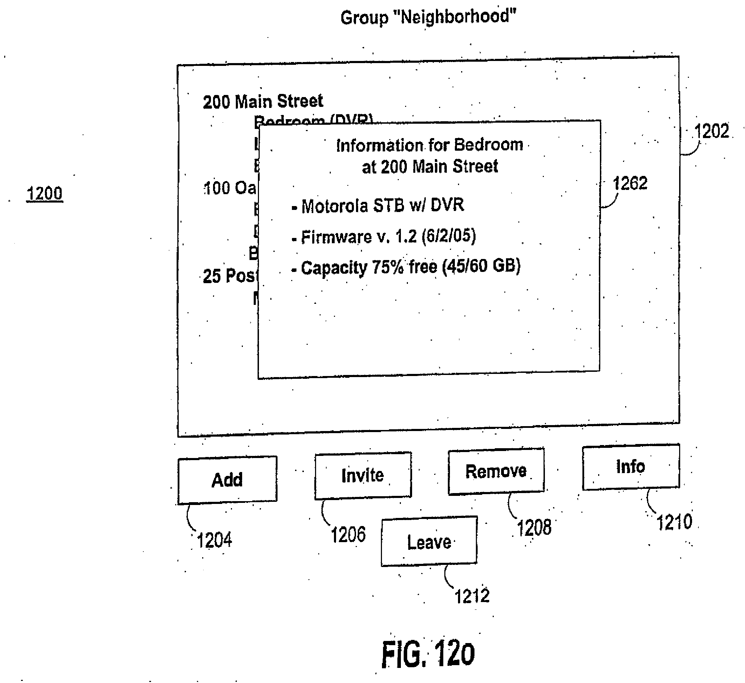

FIG. 12o shows an illustrative display screen 1200 of an interactive media guidance application that provides details on one of the user equipment devices in the group in accordance with the present invention. The interactive media guidance application may display screen 1200 of FIG. 12o in response to the user selecting one of the user equipment device listings from user equipment device display area 1202 and information button 1210. Screen 1200 of FIG. 12o may include an information overlay 1262. Information overlay 1262 may include information regarding the selected user equipment device including, for example, a description of the selected user equipment device, the firmware version of the selected user equipment device, the amount of available storage on the selected user equipment device, the status of the selected user equipment device, the date the selected user equipment device was added to the group, the home or home network on which the selected user equipment resides, and any other suitable information.

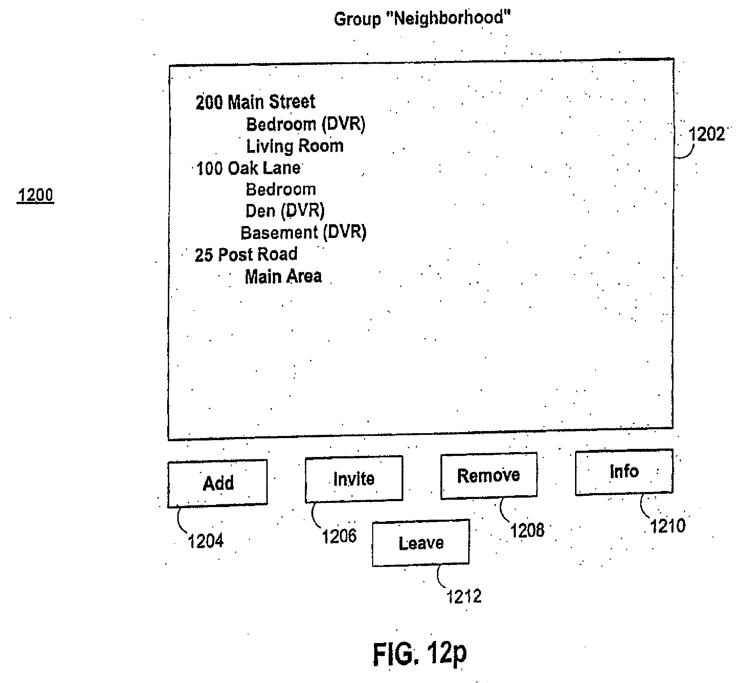

FIG. 12p is an illustrative display screen 1200 of an interactive media guidance application for allowing the user to leave the group. Screen 1200 of FIG. 12p may be accessed from any of the user equipment devices in the group. In response to the user selecting leave button 1212, the interactive media guidance application may configure each of the user equipment devices in the user's home to no longer be part of the group. In particular, the interactive media guidance application may update a list of user equipment devices that defines the group to no longer include the user equipment devices in the user's home. The interactive media guidance application implemented on the user equipment devices in the user's home may configure the user equipment devices in the user's home to no longer share content with the group. User equipment device display area 1202 may be updated to remove the user equipment devices in the user's home.

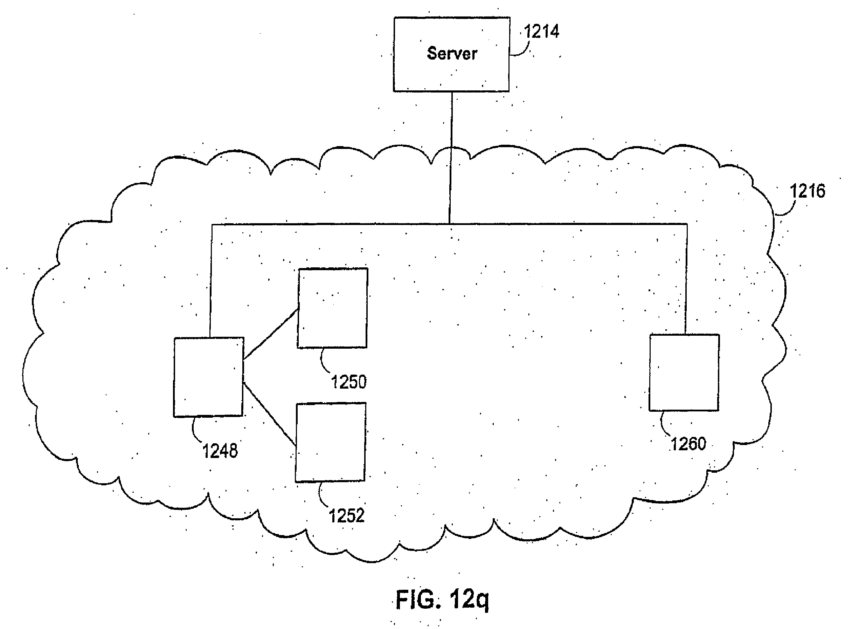

FIG. 12q is an illustrative system diagram of group 1216 after a user has chosen to leave the group in accordance with the present invention. FIG. 12q shows what happens when a user associated with the "200 Main Street" home decides to leave group 1216. In particular, the two remaining user equipment devices in the "200 Main Street" home (i.e., user equipment devices 1218 and 1228 (FIG. 12n)) are no longer a part of group 1216. None of the remaining user equipment devices in group 1216 may access content stored on or by the user equipment devices in the "200 Main Street" home. Likewise, none of the user equipment devices in the "200 Main street" home may access content shared by group 1216.

It should be understood by one skilled in the art that although the user equipment devices described in connection with FIGS. 12a-q belong exclusively to one group, user equipment devices may simultaneously belong to multiple groups. The users of user equipment devices that belong to multiple groups may share different content with each group.

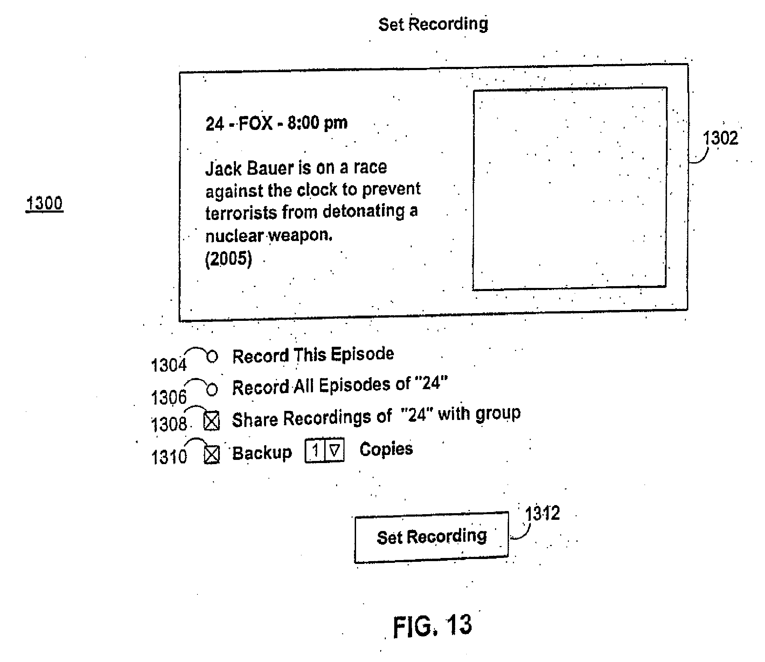

FIG. 13 shows illustrative display screen 1300 for setting a recording of a television program for a group of user equipment devices in accordance with the present invention. Screen 1300 may be accessed from any interactive media guidance applications implemented on user equipment devices in the group in response to a user selecting to record a program from a program listings screen. Screen 1300 may include program information area 1302, program recording options 1304 and 1306, group recording options 1308 and 1310, and set recording button 1312.

It should be understood by one skilled in the art that screen 1300 is one type of screen that may be displayed to allow a user to record programs using the interactive media guidance application. Other screens may be displayed by the interactive media guidance application without departing from the scope of the invention. Using interactive media guidance applications to set recordings of television programs is discussed in greater detail in Ellis U.S. Patent Publication No. 2003/0149980, which is incorporated by reference herein in its entirety.

Program information area 1302 may include any of text, graphics, and video information that relate to the selected program. For example, as shown in FIG. 13, program information area 1302 includes the title, channel, time, and release year for the selected program. Program information area 1302 also includes a summary and a representative graphic of the selected program.

The interactive media guidance application may allow the user to select program recording settings for the selected program. In response to the user selecting program recording setting 1304, the interactive media guidance application may be configured to record the current episode of the selected program. In response to the user selecting program recording settings 1306, the interactive media guidance application may be configured to record all future episodes of-the selected program (e.g., set a series recording). Series recordings are discussed in greater detail in Knudson et al. U.S. Patent Publication No. 2005/0204388, which is hereby incorporated by reference herein in its entirety. It should be understood by one skilled in the art that program recording options 1304 and 1306 are merely illustrative and that additional options may be included in screen 1300 without departing from the scope of the present invention.

The interactive media guidance application may allow the user to set group options for sharing with and backing up recordings on other user equipment devices in the group. In response to the user selecting group recording option 1308, the interactive media guidance application may allow other user equipment devices in the group to access and view the recorded program. In some embodiments, the interactive media guidance application may allow other user equipment devices in the group to access the recorded program during the recording. In some embodiments, the interactive media guidance application may allow other user equipment devices in the group to access the recorded program after the recording is complete. In some embodiments, the name of the group may be displayed. In some embodiments, if the user is part of multiple groups, group recording option 1308 may be set independently for each group.

If the user has selected group recording option 1308, the interactive media guidance application may determine the location where the selected program is to be recorded. In some embodiments, the selected program is recorded on the user equipment device on from which the recording was set. In some embodiments, the selected program is recorded on a user equipment device in the group that has the most available resources or capacity. In some embodiments, the selected program is recorded on a server (e.g., server 1214 (FIG. 12q)). In some embodiments, the interactive media guidance application allows the user to select the location where the selected program is to be recorded.

In some embodiments, the selected program may recorded in a distributed fashion, in which segments of the selected program are recorded by two or more user equipment devices in the group. Distributing the recording of the selected program among several user equipment devices in the group may ensure that the user equipment devices in the group share the burden of recording programs.

The interactive media guidance application from which the selected program is recorded may designate the user equipment devices to record segments of the selected program. In particular, the interactive media guidance application may instruct the user equipment devices when to start and stop recording the segments of the selected program. In some embodiments, the segments of the selected program may overlap to ensure that more than one user equipment device is recording a portion of the selected program at any time. In this approach, the selected program may be recorded in its entirety even if one of the user equipment devices experiences a failure.

For example, if the selected program has a one-hour duration and there are six user equipment devices capable of recording programs in the group, the interactive media guidance application may instruct the six user equipment devices to each record a ten minute segment of the selected program. However, if one of the user equipment devices experiences a failure, then a ten minute segment will be missing from the recording of the selected program. Alternatively, the interactive media guidance application may instruct the six user equipment devices to each record a twenty minute segment of the selected program such that at any point during the selected program, two user equipment devices are recording the selected program. In this approach, even if one of the user equipment devices experiences a failure, the segment that should have been recorded by the failed user equipment device may be recovered from other segments recorded by other user equipment devices.

The interactive media guidance application may maintain a log of the sequence in which the user equipment devices record the selected program to facilitate sequential playback of the segments of the selected program.at a later time. The log may include pointers for each segment that indicate the recording device on which the next segment of the selected program is recorded. The log may also include timestamps to indicate the relative locations of the segments in the selected program.

In some embodiments, the users associated with the user equipment devices in the group may designate the amount of storage on the user equipment devices in the group to be set aside for storing group recordings. For example, the distributed recordings may be stored on the portions of the user equipment devices set aside for storing group recordings. In some embodiments, each user equipment device may be required to set aside the same amount of storage as the other user equipment devices. In some embodiments, the user equipment devices may be required to contribute equal proportions of their storage capacities for storing group recordings. In some embodiments, a user selecting to set aside less space on a recording device for storing group recordings may be penalized. For example, such a user may receive group content at a lower transfer rate than other users who contribute greater amounts of storage capacity. Alternatively, such a user may be allotted less storage capacity on other user equipment devices in the group on which to store the user's recordings.

In some embodiments, instead of distributing a recording across several user equipment devices in the group, the user equipment devices in a group that are capable of recording programs may take turns recording programs. For example, if the group includes two user equipment devices that are capable of recording programs, the two user equipment devices may alternate recording programs. This approach ensures that the burden of recording programs is distributed equally among the recording devices in group.

If the user equipment device from which the recording is being set belongs to more than one group, the interactive media guidance application may allow the user to share the recording with any one or more of the groups. If the user selects more than one group with which to share the recording, the location where the recording is stored should be accessible by user equipment devices in all of the selected groups or multiple copies of the recording may be stored for access by the user equipment devices in the selected groups.

In response to the user selecting backup option 1310 and selecting a number from the provided drop-down list, the interactive media guidance application may backup the selected number of copies of the recorded program on servers or other user equipment devices in the group. The interactive media guidance application may send a request to the servers or other user equipment devices to store a backup copy of the recorded programs. In some embodiments, the interactive media guidance application may prompt the user to specify the servers and/or user equipment devices in the group on which to backup the recorded program. In some embodiments, the interactive media guidance application may automatically determine which servers and/or user equipment devices in the group to backup the recorded program based on the available resources of the servers and/or user equipment devices.

In some embodiments, the servers and user equipment devices used to backup the recorded program may be configured to independently record the program. In some embodiments, the user equipment device on which the program is being recorded may be configured to transfer the recorded program to the servers and user equipment devices for backup.

It should be understood by.one skilled in the art that program recording options 1308 and 1310 are merely illustrative and that additional options may be included in screen 1300 without departing from the scope of the present invention.

In response to the user selecting set recording button 1312, the interactive media guidance application may set a recording for the selected television program based on the program and group options set by the user.

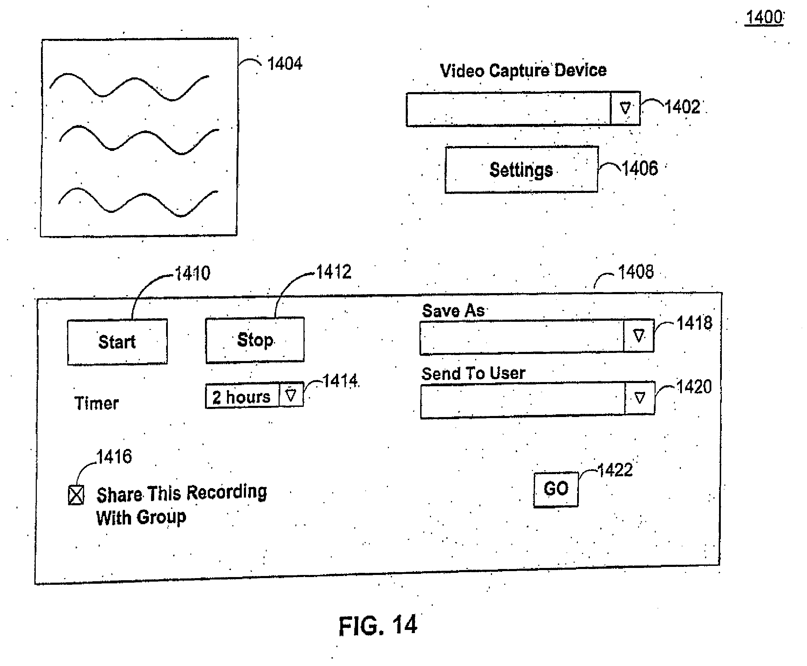

FIG. 14 shows illustrative display screen 1400 .for sharing recorded video clips with a group of user equipment devices in accordance with the present invention. Screen 1400 may be accessed from any interactive media guidance applications implemented on user equipment devices in a group. Screen 1400 may include video capture device selection drop down menu 1402, video area 1404, settings button 1406, and video capture options area 1408.

The interactive media guidance application may provide video capture device selection drop down menu 1402 to allow the user to select a video capture device coupled to any of the user equipment devices in the group. Video capture devices may include, for example, web cameras, security cameras, digital cameras, camcorders, and any other suitable video capture device. In some embodiments, the interactive media guidance application may allow the user to select audio capture devices coupled to any of the user equipment devices in the group (e.g., a microphone).

In response to the user selecting a video capture device from video capture device selection drop down menu 1402, the interactive media guidance application may establish a connection with the selected video capture device using the user equipment on which the interactive media guidance application is implemented and the user equipment device to which the selected video capture device is coupled. The user equipment device to which the selected video capture device is coupled may authenticate the user equipment device on which the interactive media guidance application is implemented as belonging to the group. For example, the user equipment device to which the selected video capture device is coupled may refer to a list of user equipment devices belonging to the group to determine if the user equipment device on which the interactive media guidance application is implemented is on the list. The list may include the names, serial numbers, network addresses, and any other identifying information for the user equipment devices belonging to the group.

Upon authenticating the user equipment device on which the interactive media guidance application is implemented as belonging to the group, the user equipment device to which the selected video capture device is coupled may transmit the video signal being output by the selected video capture device to the user equipment on which the interactive media guidance application is implemented. As discussed above, television distribution facility 104 and server 140 (FIG. 1) may be used to coordinate the transmission of the video signal to the user equipment device on which the interactive media guidance application is implemented. The interactive media guidance application may display the received video signal in video area 1404.

The interactive media guidance application may allow the user to select settings button 1406. In response to the user selecting settings button 1406, the interactive media guidance application may allow the user to select options for the selected video capture device. For example, the options may include video quality (e.g., resolution, aspect ratio, video format), audio quality (e.g., bit rate, audio format, encoding format), zoom, volume, and any other suitable options. In some embodiments, the interactive media guidance application may allow the user to configure a text message to be displayed over the output of the video capture device.

In some embodiments, the selected options may be applied directly to the selected video capture device by the user equipment device to which it is coupled. For example, if the user has selected MPEG-2 as the video format, the video capture device may be configured to output video signals in MPEG-2. In some embodiments, selected options may be applied to the video signal by the user equipment to which the selected video capture device is coupled before it is transmitted. For example, if the user has selected MPEG-2 as the video format, the user equipment device to which the selected video capture device is coupled may transcode the video signal from the video capture device into MPEG-2 format. In some embodiments, selected options may be applied to the video signal by the user equipment on which the interactive media guidance application is implemented as the video signal is being recorded. For example, if the user has selected MPEG-2 as the video format, the user equipment device on which the interactive media guidance application is implemented may record the video signal in an MPEG-2 format.

Video capture options area 1408 may include start button 1410, stop button 1412, timer drop down menu 1414, share option checkbox 1416, textbox 1418, user selection drop down menu 1420. In response to the user pressing start button 1410, the interactive media guidance application may start to record the video signal from the selected video capture device.

In some embodiments, the video signal is recorded on the user equipment device on which the interactive media guidance application is implemented. In some embodiments, the video signal is recorded on a server connected to the user equipment via a communications path. In some embodiments, the video signal is recorded on another user equipment device in the group. In some embodiments, the interactive media guidance application allows the user to identify a server or user equipment device on which to store the recording. In some embodiments, the interactive media guidance application determines the server or user equipment device on which to store the recording. The interactive media guide application may consider whether the server or user equipment device is configured to record the video signal and whether the server or user equipment device has the system resources the record the video signal.

The interactive media guidance application may continue to record the video signal from the selected video capture device until the user selects stop button 1412. Alternatively, the interactive media guidance application may allow the user to select the duration of the recording from timer drop down menu 1414. In some embodiments, this may include a start time as well as a stop time.

The interactive media.guidance application may provide textbox 1418 to allow the user to enter an identifier for the recording from the selected video capture device. Alternatively, the interactive media guidance application may generate an identifier for the recording based on any number of factors, including for example, the date, the time, the selected video capture device, and any other suitable factor.

The interactive media guidance application may allow the user to share the recording from the selected video capture device with any of the user television equipment devices in the group. In response to the user selecting checkbox 1416, the interactive media guidance application may allow the other user equipment devices in the group to access the recording. For example, the interactive media guidance application may provide the other user equipment devices in the group with a code that is needed to access the recording. Alternatively, the user equipment device on which the recording is stored may authenticate that any user equipment devices that request the recording belong to the group by, for example, referring to a list of user equipment devices belonging to the group.

If the user equipment device on which the interactive media guidance application is implemented belongs to more than one group, the interactive media guidance application may allow the user to select one or more groups with which to share the recording.

The interactive media guidance application may provide user selection drop down menu 1420 to allow the user to transmit the recording from the selected video capture device to a user of any of the user equipment devices in the group as a video or audio message. The interactive media guidance application may create a list of the users of user equipment devices in the group by polling each of the user equipment devices in the group for a list of its users. The user may select the user to receive the recording from user selection drop down menu 1420.

In response to the user selecting go button 1422, the interactive media guidance application may create the recording based on the selected settings from settings button 1406. If the user selected checkbox 1416, the interactive media guidance application may store the recording on a server or any of the user equipment devices in the group and allow any of the user equipment devices in the group to access the recording. In some embodiments, the interactive media guidance application may allow the user to specify the server or user equipment device on which to store the recording from the selected video capture device. In some embodiments, the interactive media guidance application may select a server or user equipment device to store the recording based on the available resources of the server or user equipment device.

If the user-selected a user from user selection drop down menu 1420, the interactive media guidance application may send the recording to the user equipment device associated with the selected user. The selected user may view the recording using an interactive media guidance application implemented on the user equipment device associated with the selected user.

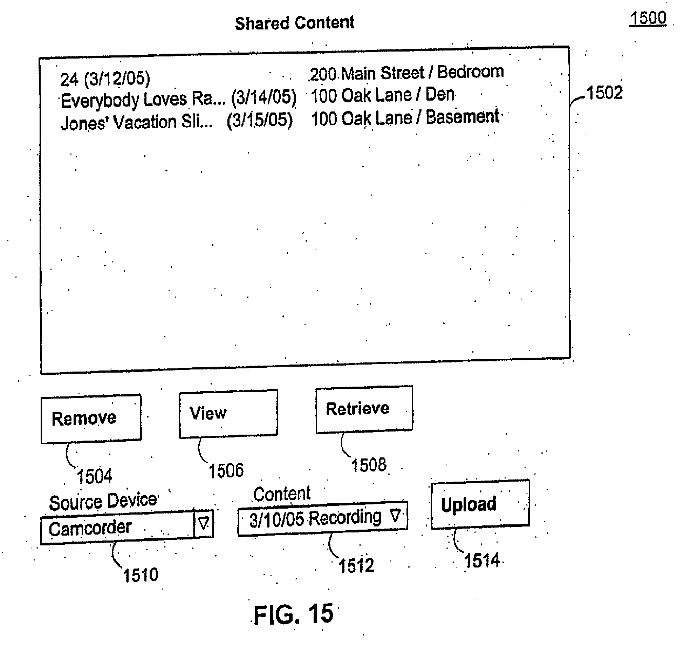

FIG. 15 shows illustrative display screen 1500 for accessing and managing digital content shared among a group of user equipment devices in accordance with the present invention. Screen 1500 may be accessed from any interactive media guidance applications implemented on user equipment devices in the group. Screen 1500 may include content area 1502, remove button 1504, view button 1506, retrieve button 1508, source selection drop down menu 1510, content selection drop down menu 1512, and upload button 1514.

Content area 1502 may include a listing of content shared among the user equipment devices belonging to the group and servers associated with the group (i.e., accessible by user equipment devices belonging to the group via one or more communications paths). For example, the listing of content may include recorded programs, digital pictures, audio clips, digital movie clips, and any other suitable content stored on the user equipment devices belonging to the group of servers associated with the group. Each content listing may include a timestamp of when the content was created or recorded and information regarding the location at which the content is stored. For example, as shown in FIG. 15, content area 1502 includes a listing for a recording of "24". The listing indicates that the recording of "24" was made on March 12, 2005 and is stored on a user equipment device named "Bedroom" at 200 Main Street.

The listing of content may be stored on any of the user equipment devices belonging to the group, servers (e.g., server 130 and server 140 (FIG. 1)), and service provider 142 (FIG. 1). The listing of content may be updated as additional content is shared with the group. In some embodiments, the listing of content may include all of the content shared among the group, regardless of whether the user equipment devices on which the content is stored are powered on or off. In some embodiments, the listing of content may include shared content that are currently available to be accessed. For example, in this case, the listing of content may include shared content hosted on servers or stored on user equipment devices that are powered on.

The interactive media guidance application may provide remove button 1504, view button 1506, and retrieve button 1508 to allow the user to manage the content listed in content area 1502. In response to the user selecting one of the content listings in content area 1502 and remove button 1504, the interactive media guidance application may remove the selected content listing from content area 1502.

In response to the user selecting remove button 1504, the interactive media guidance application may also delete the selected content if the selected content is stored on the user equipment device on which the interactive media guidance application is implemented. Alternatively, if the selected content is stored on a server or another user equipment device in the group, the interactive media guidance application may delete the content if it was recorded using the interactive media guidance application or by the user who is selecting to remove the content. If the content is neither recorded on the user equipment device on which the interactive media guidance application is implemented nor recorded using the interactive media guidance application, then the content may not be deleted by the interactive media guidance application. Therefore, using remove button 1504 may have different effects on recorded content depending on the location where the recorded content is stored and/or the interactive media guidance application that was used to record the content. In some embodiments, the interactive media guidance application may allow the user who created the recorded content to edit, for example, the title of the content or the folder in which the content is stored.

In some embodiments, the interactive media guidance application may allow the user to set or edit parental controls for the content if the content was recorded by the user. For example, the user may set an access code for the content in order for users at user equipment devices in the group to access the content. In another example, the user may prevent other users at user equipment devices in the group from accessing the content if the other users are underage.

In response to the user selecting one of the content listings in content area 1502 and view button 1506, the interactive media guidance application may access and display the selected content and/or additional information regarding the selected content. The interactive media guidance application may send a request to the server or user equipment device on which the content is stored.

In response to receiving such a request, the server or user equipment device may authenticate that the interactive media guidance application is implemented on a user equipment device that is part of the group. For example, the server or user equipment device may refer to a list of user equipment devices that define the group.

Once the server or user equipment device has authenticated that the interactive media guidance application is privileged to access the selected content, the server or user equipment device may retrieve and transfer the selected content to the user equipment device on which the interactive media guidance application is implemented.

Transferring content between user equipment devices in the group may involve coordinating the transfer of content with a server (e.g., server 1214 (FIG. 12q)). In some cases, coordination may not be required because the content can be accessed directly by the user equipment device. For example, the content may be stored on a server that is directly accessible by the user equipment device. In another example, the user equipment device that is requesting the content may be located on the same home network on which the user equipment device that stores the content is located.

Transferring content between user equipment devices located in different homes may involve coordination with a server. For example, referring to FIG. 12q, if user equipment device 1260 were to access a recorded program stored on user equipment device 1226, user equipment device 1260 may send a request to access the recorded program to server 1214. Server 1214 may authenticate that user equipment device 1260 belongs to the group by, for example, referring to the list of user equipment devices that defines the group. If server 1214 authenticates that user equipment device 1260 belongs to the group, server 1214 may relay the request to the home network in which user equipment device 1226 is located. Because of the configuration of the home network on which user equipment device 1226 is located, the request to access the stored content may be further relayed to user equipment device 1226 by user equipment device 1218. The stored content may be transferred from user equipment device 1218 to server 1214 and finally to user equipment device 1260.

In some embodiments, streaming content between user equipment devices in different homes may involve buffering the content on the server. The server may stream the buffered content to the user equipment device that requested the content. In some embodiments, the server may buffer the content in its entirety before streaming the content to the user equipment device that requested the content. In some embodiments, the server may buffer a portion of the content and begin streaming the content. The server may determine the appropriate time to begin streaming the content to allow the content to be received from the user equipment device in its entirety before reaching the end of the buffer.

Retrieve button 1508 may be provided to allow a user to obtain a backup copy of content if the user's copy has become corrupted or is accidentally deleted (or to create a local copy or backup). In response to the user selecting one of the content listings in content area 1502 and retrieve button 1508, the server or user equipment on which the selected content is stored may authenticate that the user equipment device on which the interactive media guidance application is stored is part of the group. Once the user equipment device on which the interactive media guidance application is implemented is authenticated as belonging to the group, the interactive media guidance application may retrieve a backup copy of the selected content from the server or user equipment device upon which the content is stored. As discussed above, a server (e.g., server 1214 (FIG. 12q) may be used to coordinate the transfer of the backup copy to the user equipment device.

The user may also share additional content with the group from screen 1500. The interactive media guidance application may provide source device selection drop down menu 1510 and content selection drop down menu 1512 to allow the user to select content from a source to share with the group. The source devices that may be listed in source device selection drop down menu 1510 may include the user equipment device on which the interactive media guidance application is implemented and any peripheral devices attached to the user equipment device (e.g., removable media, portable electronics, optical storage discs, cameras, camcorders, etc.). Once the user has selected a source device, the interactive media guidance application may obtain a listing of content stored on the selected source device and display the listing in content selection drop down menu 1512. The user may select one or more of the listed content.

In response to the user selecting upload button 1514, the interactive media guidance application may share the selected content with the group. For example, in response to the user selecting upload button 1514, the interactive media guidance application may cause the selected content to be stored on the user equipment device on which it is implemented, a server, or on one of the user equipment devices in the group. The server or user equipment device on which the content is stored may be configured to allow other user equipment devices in the group to access the content. Content area 1502 may be updated to display one or more listings for the uploaded content.

The user interfaces of the interactive media guidance application as shown in FIGS. 12-15, use commonly-used application objects such as buttons, lists, and checkboxes. It will be understood that these objects are only illustrative, and other objects can be used by those skilled in the art without departing from the scope and spirit of the present invention.

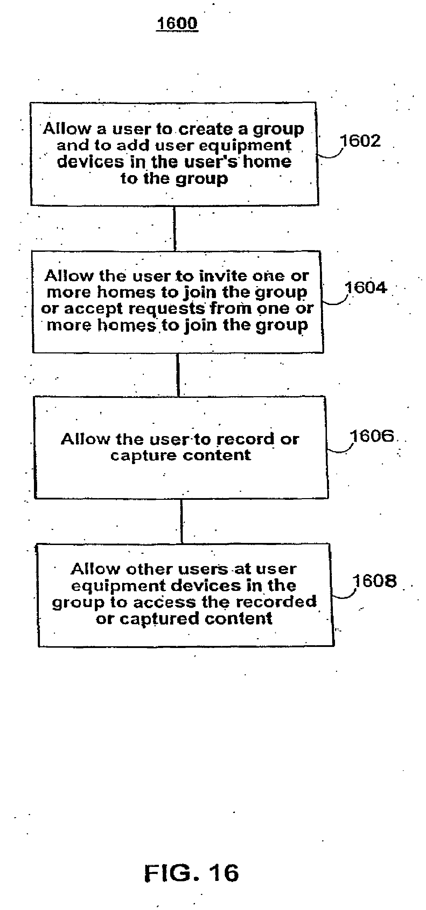

FIG. 16 shows an illustrative flow diagram 1600 for sharing content between user equipment devices belonging to a group in accordance with the present invention.

At step 1602, an interactive media guidance application may allow a user to create a group and to add user equipment devices located in the user's home to the group. The interactive media guidance application may display a list of user equipment devices in the home network. The user may select one or more user equipment devices to add.to the group. The list of user equipment devices.that defines the group may be updated to include the selected user equipment devices to be added to the group. Interactive media guidance applications implemented on the added user equipment devices may enable the added user equipment devices to share content with the group.

At step 1604, the interactive media guidance application may allow the user to invite one or more homes to join the group or accept requests from one or more homes to join the group. The interactive media guidance application may allow the user to search for homes to invite to join the group. The invitations may be accepted by users using interactive media guidance applications at the invited homes. The interactive media guidance application may also receive requests to join the group from other homes. The requests may be accepted by the user using any one of the interactive media guidance applications implemented on user equipment devices in the group.

The users at the joining homes may configure any of the user equipment devices located in the joining homes to join the group. The user equipment devices in the joining homes may be configured to share content with the other user equipment devices in the group. A list of user equipment devices that defines the group may be updated to include the user equipment devices that have been configured to join the group. Interactive media guidance applications implemented on these user equipment devices may enable the user equipment devices to share content with the group.

At step 1.606, the interactive media guidance application may allow the user to record or capture content (e.g., video content, audio content). For example, the interactive media guidance application may allow the user to select television programs for recording. In another example, the interactive media guidance application may access a video capture device (e.g., a camcorder, a security camera) and record the video signal from the video capture device. These recordings may be stored on any of the user equipment devices belonging to the group or any servers connected via communications paths to user equipment devices belonging to the group.

At step 1608, interactive media guidance applications implemented on the user equipment devices belonging to the group may access content shared by other user equipment devices in the group. The interactive media guidance applications may display a list of content shared between user equipment devices in the group. The content listing may include information, such as, a description of the content, the source of the content, and the date of the content. The interactive media guidance application may allow the user to select content to view from the list.

In response to the user requesting to view the content, the interactive media guidance application may send a request to the server or user equipment device on which the selected content is stored. The server or user equipment device may authenticate that the interactive media guidance application is implemented on a user equipment device that is part of the group.

For example, the server or user equipment device may require that the interactive media guidance application provide a group access code (e.g., password) or the server or user equipment device may refer to a list of user equipment devices that defines the group to determine if the user equipment device on which the interactive media guidance application is implemented is on the list.

In response to the server or user equipment device authenticating that the interactive media guidance application is implemented on a user equipment device belonging to the group, the server or user equipment device may transfer or stream the selected content to the interactive media guidance application. A server (e.g., server 1214 (FIG. 12q)) may coordinate the authentication and transfer of content from the user equipment device on which the content is stored to the user equipment device that is requesting the content, especially if the user equipment device on which the content is stored and the user equipment device that is requesting the content are not located on the same home network. The interactive media guidance application may display the selected content after it is received in its entirety or it may display the selected content as it is being received. In some embodiments, the selected content may be saved on the user equipment device on which the interactive media guidance application is implemented.

In some embodiments, recorded content may be played back from one or more servers or user equipment devices. If recorded content is stored on a server or user equipment device in its entirety, the recorded content may be played by the interactive media guidance application that is accessing the recorded content. If the recorded content is stored in multiple segments on multiple user equipment devices, the interactive media guidance application may play the segments sequentially from the user equipment devices on which the segments are stored. If the content is stored in multiple segments on multiple user equipment devices, the interactive media guidance application may download some or all of the recorded content to the user equipment device on which the interactive media guidance application is implemented. The interactive media guidance application may play back the downloaded content and if the content was not downloaded in its entirety, the interactive media guidance application may continue to play the content from the user equipment devices on which the remaining segments of the content are stored.

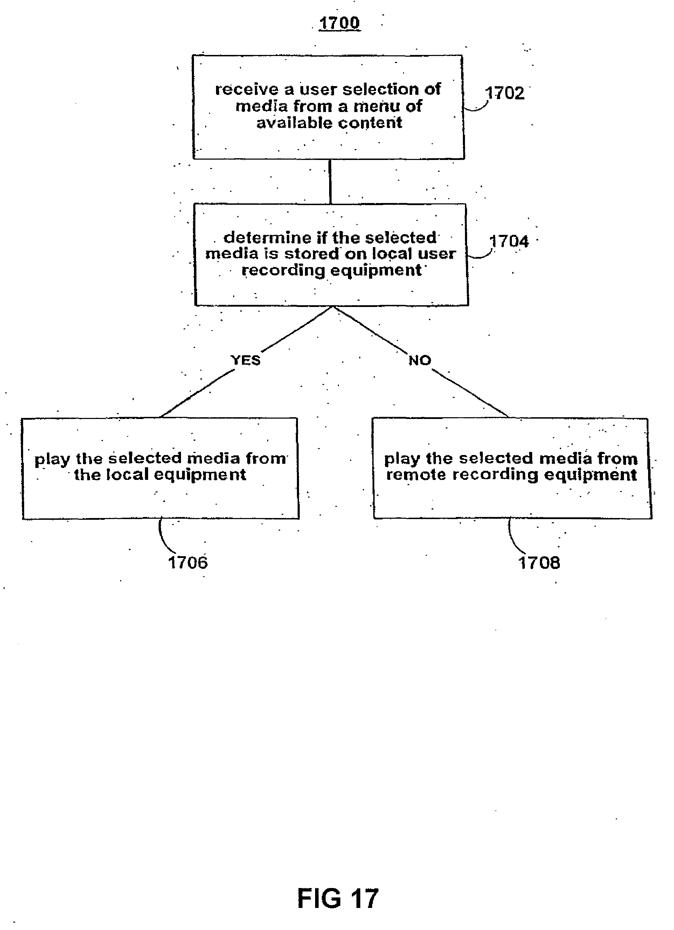

FIG. 17 shows an illustrative flow diagram 1700 for accessing recorded content in accordance with the present invention.

At step 1702, an interactive media guidance application may receive a user selection of media from a menu of available content. For example, the interactive media guidance application may display a listing of content shared within a group of user equipment devices. The listing of content may include content recorded by the user equipment device on which the interactive media guidance application is implemented and content recorded by other user equipment devices in the group. In some embodiments, the listing may not include content stored on user equipment devices in the group that are not powered on. In some embodiments, the listing may include all content stored on user equipment devices in the group including those that are not powered on.

At step 1704, the interactive media guidance application may determine if the selected media is stored on the local user recording equipment (i.e., the recording device that is associated with the user equipment device on which the interactive media guidance application is implemented). In a group environment, shared content may be stored on any server or user equipment device that is accessible by the user equipment devices in the group. In some cases, the shared content may be stored locally and, in other cases, the shared content may be stored remotely.

In some embodiments, the selected media may be associated with an identifier that indicates the location on which the selected media is stored. For example, the identifier may have been created at the time the selected media was recorded. The interactive media guidance application may refer to the identifier for the selected media to determine if the selected media is stored locally. In some embodiments, the interactive media guidance application may determine if the selected media is stored locally by comparing the known attributes of the selected media (e.g., filename, size, date of creation, content) with the attributes of the contents of the local user recording equipment.

At step 1706, if the interactive media guidance application determines that the selected media is stored locally, the interactive media guidance application may play the selected media from the local user recording equipment.

At step 1708, if the interactive media guidance application determines that the selected media is not stored locally, the interactive media guidance application may play the selected media from remote recording equipment. The interactive media guidance application may determine the location where the selected media is stored. In some embodiments, the interactive media guidance application may refer to the identifier associated with the selected media that indicates the location on which the selected media is stored. In some embodiments, the interactive media guidance application may request that the servers connected to the group and the user equipment devices in the group perform local searches for the selected media to determine the location where the selected media is stored.

Once the interactive media guidance application determines the location where the selected media is stored, the interactive media guidance application may request the selected media from the remote recording equipment at the location where the selected media is stored. Before allowing the user equipment device to play the selected media, the remote recording equipment may authenticate the interactive media guidance application as being implemented on a user equipment device that belongs to the group. The remote recording equipment may refer to a list of user equipment devices that defines the group to determine if the user equipment device is in the group.

After the remote recording equipment has authenticated the user equipment device as belonging to the group, the remote recording device may allow the user equipment device to play the selected content. In some cases, the remote recording equipment may be located in the same home network as the user equipment device. The interactive media guidance application may access the selected media across the home network. In some cases, the remote recording equipment may be a server (e.g., server 1214 (FIG. 12q)). The interactive media guidance application may access the selected media on the server. In some cases, the remote recording equipment may be located outside of the user's home or home network. The user equipment device may access the selected media through a server (e.g., server 1214) that is also connected to the remote recording equipment.

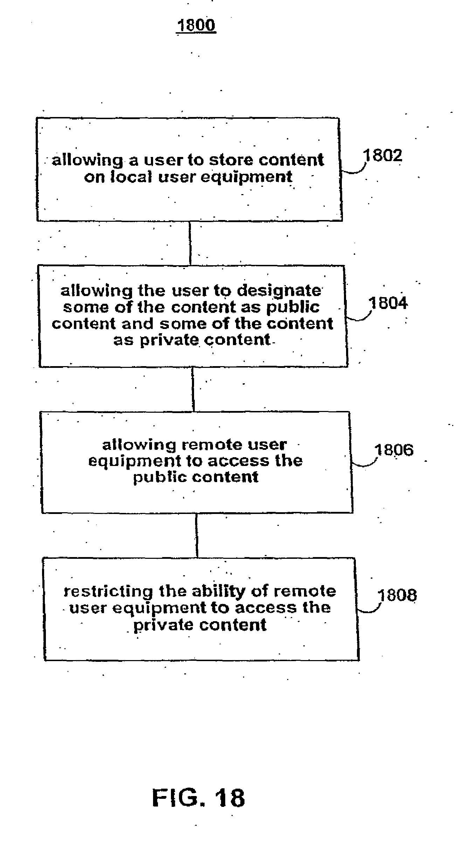

FIG. 18 shows an illustrative flow diagram 1800 for storing public and private recorded content in accordance with the present invention.

At step 1802, an interactive media guidance application implemented on local user equipment (e.g., user equipment device 1218 (FIG. 12n)) may allow a user to store content on the local user equipment. Content may include recorded television programs and recordings from audio/video capture devices (e.g., camcorders) For example, an interactive media guidance application implemented on the local user equipment device may allow a user to select a television program for recording on the local user equipment device.

At step 1804, the interactive media guidance application may allow the user to designate the content as being public or private. For example, if the user wishes to record a television program and share the recorded television program with a group of user equipment devices (e.g., group 1216 (FIG. 12l)), the user may choose to make the recording public. In another example, if the user wishes to record a television program only for playing back by the local user equipment, the user may choose to make the recording private. In some embodiments, the user may indicate that the content is public for a limited number of user equipment devices in the group.

At step 1806, the interactive media guidance application may allow remote user equipment to access the public content stored on the local user equipment. The interactive media guidance application may allow the remote user equipment to play the public content from the local user equipment. For example, the local user equipment may act as a streaming content server for the remote user equipment. In some embodiments, remote user equipment may be limited to user equipment devices that belong to the same group as the local user equipment. The local user equipment may authenticate the remote user equipment device as belonging to the group before allowing the remote user equipment to access the content.

The remote user equipment may access the content via any servers to which the local and remote user equipment are connected. In some cases, the local or remote user equipment may be connected indirectly to the server, i.e. the local or remote user equipment may be located in a home network that is connected to the server. The local user equipment may buffer the content on the server, which may relay or stream the buffered content to the remote user equipment.

At step 1808, the interactive media guidance application may restrict the ability of remote user equipment to access the private content. For example, if remote user equipment belonging to the same group as the local user equipment attempts to access private content on the local user equipment, the local user equipment may refuse the request by the remote user equipment device to access the content.

In some embodiments, the private content may only be accessed by the user equipment device on which the private content is stored. In some embodiments, the private content may only be accessed by the user that selected to store the content. In some embodiments, the private content may also be accessed by other user equipment devices in the user's home network. For example, if a user selects to store private content on a user equipment device in a home network, any of the user equipment devices in the home network may be allowed to access the private content.

In this approach, local user equipment may store a combination of public and private content and remote user equipment may only access the public content on the local user equipment.
In some embodiments, when a household or user equipment device is added to a group (or at a later time), the user of that device may restrict the accesses and uses of that device. For example, the user may determine whether the device can be used to record programs for users in other households, whether users in other households can access a video capture device that may be coupled to the user equipment, whether the user equipment may share its contents with other users, or other suitable restrictions.

The foregoing is merely illustrative of the principles of this invention and various modifications can be made by those skilled in the art without departing from the scope and spirit of the invention.
THE FOLLOWING EMBODIMENTS ARE DISCLOSED:
1. A method for creating a group of user equipment devices and sharing content with the user equipment devices in the group comprising:
   allowing a user to create the group by selecting to add one or more user equipment devices in the user's home to the group;
   allowing the user to expand the group by inviting user equipment devices in other user's homes to join the group or accepting requests from user equipment devices in other user's homes to join the group;
   allowing the user to record content that is shared with the other user equipment devices in the group;
   displaying a list of content shared among the user equipment devices in the group that includes the content recorded by the user;
   receiving a request from a user equipment device to play the content recorded by the user; and
   transmitting the content to the user equipment device.
2. The method of item 1, wherein allowing the user to record content that is shared with the other user equipment devices in the group comprises:
   allocating storage space to be shared by the group on at least two of the user equipment devices in the group to record the selected content: and
   storing the selected content using the allocated storage space.
3. The method of item 1, wherein the content recorded by the user is selected to be played from the list of content shared among the user equipment devices in the group.
4. The method of item 1, wherein transmitting the content to the user equipment device comprises relaying the content to the user equipment device through a server.
5. The method of item 1, wherein the recorded content is a recording of a television program or a recording of an output of a video capture device.
6. The method of item 1, further comprising authenticating that the user equipment device that is requesting to play the content recorded by the user belongs to the group.
7. A system for creating a group of user equipment devices and sharing content with the user equipment devices in the group comprising:
   a user equipment device located in a user's home configured to:
      allow the user to create the group by selecting to add one or more user equipment devices in the user's home to the group;
      allow the user to expand the group by inviting user equipment devices in other user's homes to join the group and accepting requests from user equipment devices in other user's homes to join the group;
      allow the user to record content that is shared with the other user equipment devices in the group;
      display a list of content shared among the user equipment devices in the group that includes the content recorded by the user;
      receive a request from a user equipment device to play the content recorded by the user; and
      transmit the content to the user equipment device.
8. The system of item 7, wherein the user equipment device located in the user's home is further configured to:
   allocate storage space to be shared by the group on at least two of the user equipment devices in the group to record the selected content; and
   store the selected content using the allocated storage space.
9. The system of item 7, wherein the content recorded by the user is selected to be played from the list of content shared among the user equipment devices in the group.
10. The system of item 7 , wherein the user equipment device is further configured to relay the content to the user equipment device through a server.
11. The system of item 7, wherein the recorded content is a recording of a television program or a recording of an output of a video capture device.
12. The system of item 7, wherein the user equipment device located in the user's home is further configured to authenticate that the user equipment device that is requesting to play the content recorded by the user belongs to the group.
13. Machine-readable media for creating a group of user equipment devices and sharing content with the user equipment devices in the group, the machine-readable media comprising machine-readable instructions encoded thereon for:
   allowing a user to create the group by selecting to add one or more user equipment devices in the user's home to the group;
   allowing the user to expand the group by inviting user equipment devices in other user's homes to join the group and accepting requests from user equipment devices in other user's homes to join the group;
   allowing the user to record content that is shared with the other user equipment devices in the group;
   displaying a list of content shared among the user equipment devices in the group that includes the content recorded by the user;
   receiving a request from a user equipment device to play the content recorded by the user; and
   transmitting the content to the user equipment device.
14. The machine-readable media of item 13, wherein allowing the user to record content that is shared with the other user equipment devices in the group comprises:
   allocating storage space to be shared by the group on at least two of the user equipment devices in the group to record the selected content; and
   storing the selected content using the allocated storage space.
15. The machine-readable media of item 13, wherein the content recorded by the user is selected to be played from the list of content shared among the user equipment devices in the group.
16. The machine-readable media of item 13, wherein transmitting the content to the user equipment device comprises relaying the content to the user equipment device through a server.
17. The machine-readable media of item 13, wherein the recorded content is a recording of a television program or a recording of an output of a video capture device.
18. The machine-readable media of item 13, further comprising machine-readable instructions encoded thereon for authenticating that the user equipment device that is requesting to play the content recorded by the user belongs to the group.
19. A method for creating a group of user equipment devices and sharing content with the user equipment devices in the group comprising:
   allowing a user to create the group by selecting to add one or more user equipment devices in the user's home to the group;
   .allowing the user to expand the group by inviting user equipment devices in other user's homes to join the group or accepting requests from user equipment devices in other user's homes to join the group;
   allowing the user to select to record content that is shared with the other user equipment devices in the group;
   allocating storage space on at least two of the user equipment devices in the group to record the selected content;
   storing the selected content using the allocated storage space;
   receiving a request from a user equipment device to play the content recorded by the user; and
   transmitting the content to the user equipment device.
20. The method of item 19, wherein storing the selected content using the allocated storage space comprises recording a segment of the selected content on the allocated space on each of the at least two user equipment devices.
21. The method of item 20, wherein transmitting the content to the user equipment device comprises:
   sequentially transmitting the segments of the content to the user equipment device that is requesting to play the content.
22. The method of item 20, wherein transmitting the content to the user equipment device comprises:
   combining the segments of the content.
23. The method of item 22, wherein the combined content is transmitted to the user equipment.
24. The method of item 19, wherein the user equipment devices in the group are required to allocate an equal amount of space or an equal proportion of space to store recordings shared by the user equipment devices in the group.
25. The method of item 19, further comprising authenticating that the user equipment device that is requesting to play the content recorded by the user belongs to the group.
26. A system for creating a group of user equipment devices and sharing content with the user equipment devices in the group comprising:
   a user equipment device located in a user's home configured to:
      allow the user to create the group by selecting to add one or more user equipment devices in the user's home to the group;
      allow the user to expand the group by inviting user equipment devices in other user's homes to join the group or accepting requests from user equipment devices in other user's homes to join the group;
      allow the user to select to record content that is shared with the other user equipment devices in the group;
      allocate storage space on at least two of the user equipment devices in the group to record the selected content;
      cause the selected content to be stored using the allocated storage space;
      receive a request from a user equipment device to play the content recorded by the user; and
      cause the content to be transmitted to the user equipment device.
27. The system of item 26, wherein the user equipment device located in the user's home is further configured to cause a segment of the selected content to be recorded on the allocated space for each of the at least two user equipment devices.
28. The system of item 27, wherein the user equipment device located in the user's home is further configured to:
   cause the segments of the content to be sequentially transmitted to the user equipment device that is requesting the content.
29. The system of item 27, wherein the user equipment device located in the user's home is further configured to:
   cause the segments of the content to be combined.
30. The system of item 29, wherein the combined content is transferred to the user equipment device that is requesting the content.
31. The system of item 26, wherein the at least two user equipment devices in the group are required to allocate an equal amount of space or an equal proportion of space to store recordings shared by the user equipment devices in the group.
32. The system of item 26, wherein the user equipment device located in the user's home is further configured to:
   authenticate that the user equipment device that is requesting to play the content recorded by the user belongs to the group.
33. Machine-readable media for creating a group of user equipment devices and sharing content with the user equipment devices in the group, the machine-readable media comprising machine-readable instructions encoded thereon for:
   allowing a user to create the group by selecting to add one or more user equipment devices in the user's home to the group;
   allowing the user to expand the group by inviting user equipment devices in other user's homes to join the group or accepting requests from user equipment devices in other user's homes to join the group;
   allowing the user to select to record content that is shared with the other user equipment devices in the group;
   allocating storage space on at least two of the user equipment devices in the group to record the selected content;
   storing the selected content using the allocated storage space;
   receiving a request from a user equipment device to play the content recorded by the user; and
   transmitting the content to the user equipment devices.
34. The machine-readable media of item 33, wherein storing the selected content using the allocated storage space comprises recording a segment of the selected content on the allocated space on each of the at least two user equipment devices.
35. The machine-readable media of item 34, wherein transmitting the content to the user equipment device comprises:
   sequentially transmitting the segments of the content to the user equipment device that is requesting to play the content.
36. The machine-readable media of item 34, wherein transmitting the content to the user equipment device comprises:
   combining the segments of the content.
37. The machine-readable media of item 36, wherein the combined content is transmitted to the user equipment.
38. The machine-readable media of item 33, wherein the at least two user equipment devices in the group are required to allocate an equal amount of space or an equal proportion of space to store recordings shared by the user equipment devices in the group.
39. The machine-readable media of item 33 further comprising machine-readable instructions encoded thereon for authenticating that the user equipment device that is requesting to play the content recorded by the user belongs to the group.
40. A method for playing recorded media from an interactive media guidance application implemented on a local user recording equipment comprising:
   receiving a user selection of media from a menu of available shared recorded content;
   determining if the selected media is stored on the local user recording equipment;
   in response to determining that the selected media is stored on local user recording equipment, playing the selected media from the local user recording equipment; and
   in response to determining that the selected media is not stored on local user recording equipment, playing the selected media from remote recording equipment.
41. The method of item 40, wherein the remote recording equipment is a network server.
42. The method of item 40, wherein the remote recording equipment is another user's equipment.
43. The method of item 42, wherein the selection is sent to a network server and routed to other user's equipment.
44. The method of item 40, wherein the menu of available recording content comprises content recorded from user equipment devices that belong to a single group.
45. The method of item 44, wherein the recorded content is available if the user equipment device on which it is stored is powered on.
46. The method of item 40, wherein playing the selected media from remote recording equipment comprises one of:
   downloading the selected media to the local user equipment and playing the downloaded media from the local user equipment;
   playing the selected media directly from the remote recording equipment; or
   buffering the selected media on the local user equipment device and playing the selected media from the buffer.
47. A system for playing recorded media comprising:
   a local user recording equipment configured to:
      receive a user selection of media from a menu of available shared recorded content;
      determine if the selected media is stored on the local user recording equipment;
      play the selected media from the local user recording equipment if the selected media is stored on the local user recording equipment; and
      play the selected media from remote recording equipment if the selected media is not stored on the local user recording equipment.
48. The system of item 47, wherein the remote recording equipment is a network server.
49. The system of item 47, wherein the remote recording equipment is another user's equipment.
50. The system of item 49, wherein the selection is sent to a network server and routed to the other user's equipment.
51. The system of item 47, wherein the menu of available recording content comprises content recorded from user equipment devices that belong to a single group.
52. The system of item 51, wherein the recorded content is available if the user equipment device on which it is stored is powered on.
53. The system of item 47, the local user equipment is further configured to:
   download the selected media to the local user equipment and play the downloaded media from the local user equipment;
   play the selected media directly from the remote recording equipment; or
   buffer the selected media on the local user equipment device and play the selected media from the buffer.
54. Machine-readable media for playing recorded media from an interactive media guidance application implemented on a local user recording equipment, the machine-readable media comprising machine-readable instructions recorded thereon for:
   receiving a user selection of media from a menu of available shared recorded content;
   determining if the selected media is stored on the local user recording equipment;
   in response to determining that the selected media is stored on local user recording equipment, playing the selected media from the local user recording equipment; and
   in response to determining that the selected media is not stored on local user recording equipment, playing the selected media from remote recording equipment.
55. The machine-readable media of item 54, wherein the remote recording equipment is a network server.
56. The machine-readable media of item 54, wherein the remote recording equipment is another user' s equipment.
57. The machine-readable media of item 56, wherein the selection is sent to a network server and routed to the other user's equipment.
58. The machine-readable media of item 54, wherein the menu of available recording content comprises content recorded from user equipment devices that belong to a single group.
59. The machine-readable media of item 58, wherein the recorded content is available if the user equipment device on which it is stored is powered on.
60. The machine-readable media of item 54, wherein playing the selected media from remote recording equipment comprises one of:
   downloading the selected media to the local user equipment and playing the downloaded media from the local user equipment;
   playing the selected media directly from the remote recording equipment; or
   buffering the-selected media on the local user equipment device and playing the selected media from the buffer.

## Claims

1. A method for recording programs in a group of user equipment devices connected over a network, the method comprising:
selecting a program for recording using an interactive media guidance application on a first user equipment device of the group; and
determining with the interactive media guidance application a second user equipment device of the group where the program is to be recorded.

2. A method as claimed in claim 1 in which the second user equipment device in the group has the most available capacity.

3. A method as claimed in claim 1 comprising
determining with the interactive media guidance application a third user equipment device of the group where the program is to be recorded.

4. A method as claimed in claim 3 comprising
designating the second user equipment equipment device to record a segment of the program and designating the third user equipment device to record another segment of the program.

5. A method as claimed in claim 4 in which the segments are overlapping.

6. A method a claimed in claim 3 comprising designating each of the second and the third user equipment devices to record all of the program.

7. A system as claimed in claim 1 comprising
repeatedly recording programs with user equipment devices in the group, each further program being recorded by a corresponding user equipment device so as to distribute the burden of recording the programs qually among user equipment devices in the group capable of recording.

8. A system for recording programs in a group of user equipment devices connected over a network, the system comprising:
means for selecting a program for recording using an interactive media guidance application on a first user equipment device of the group; and
means for determining with the interactive media guidance application a second user equipment device of the group where the program is to be recorded.

9. A system as claimed in claim 8 in which the second user equipment device in the group has the most available capacity.

10. A system as claimed in claim 8 comprising
means for determining with the interactive media guidance application a third user equipment device of the group where the program is to be recorded.

11. A system as claimed in claim 10 comprising
means for designating the second user equipment equipment device to record a segment of the program and designating the third user equipment device to record another segment of the program.

12. A system as claimed in claim 11 in which the segments are overlapping.

13. A system a claimed in claim 10 comprising
means for designating each of the second and the third user equipment devices to record all of the program.

14. A system as claimed in claim 8 comprising
means for repeatedly recording programs with user equipment devices in the group, each further program being recorded by a corresponding user equipment device so as to distribute the burden of recording the programs qually among user equipment devices in the group capable of recording.
